# FASCICULE DE BREVET EUROPEEN

(11) **EP 3 555 743 B1**
(45) Date de publication et mention de la délivrance du brevet: **06.01.2021**
(21) Numéro de dépôt: 17825578.2
(22) Date de dépôt: 14.12.2017
(51) Int. Cl.: G06F 9/32, G06F 21/75

(54) **PROCÉDÉ D'EXÉCUTION PAR UN MICROPROCESSEUR D'UN CODE MACHINE POLYMORPHIQUE D'UNE FONCTION PRÉDÉTERMINÉE**
VERFAHREN ZUR AUSFÜHRUNG EINES POLYMORPHEN MASCHINENCODES EINER VORBESTIMMTEN FUNKTION DURCH EINEN MIKROPROZESSOR
METHOD FOR EXECUTING A POLYMORPHIC MACHINE CODE OF A PREDETERMINED FUNCTION BY A MICROPROCESSOR

(30) Priorité: 19.12.2016 FR 1662780
(43) Date de publication de la demande: 23.10.2019
(73) Titulaire: Commissariat à l'Energie Atomique et aux Energies Alternatives, 75015 Paris (FR)
(72) Inventeur: COUROUSSE, Damien, 38100 Grenoble (FR); HISCOCK, Thomas, 38000 Grenoble (FR); SAVRY, Olivier, 38360 Sassenage (FR)
(74) Mandataire: Colombo, Michel
(86) Numéro de dépôt international: PCT/FR2017/053592
(87) Numéro de publication internationale: WO 2018/115650

(56) Documents cités:
- WO-A2-2005/124506
- FR-A1- 3 011 354

## Description

L'invention concerne un procédé d'exécution par un microprocesseur d'un code machine polymorphique d'une fonction prédéterminée. L'invention concerne également un code machine polymorphique, un support d'enregistrement d'informations et un appareil électronique pour la mise en œuvre de ce procédé.

La demande US2015/0095659A1 décrit un procédé d'exécution par un microprocesseur d'un code machine polymorphique d'une fonction prédéterminée lors duquel le microprocesseur :
a) acquiert une valeur numérique apte à varier, d'une exécution à une autre du même code machine polymorphique, puis
b) génère, en fonction de la valeur numérique acquise, un premier et, en alternance, un second flots d'instructions, ces premier et second flots d'instructions étant chacun aptes à réaliser la fonction prédéterminée lorsqu'ils sont exécutés par le microprocesseur, chacun de ces flots d'instructions étant formé d'une succession de blocs de base, chaque bloc de base débutant à une adresse de branchement et se terminant par une instruction de branchement vers une adresse de branchement d'un autre bloc de base, ces premier et second flots d'instructions se distinguant l'un de l'autre par au moins un opcode d'instructions ou un opérande différent ou une valeur littérale différente ou un nombre d'instructions différent,
c) enregistre le flot d'instructions généré dans une mémoire principale, puis
d) exécute flot d'instructions généré qui vient d'être enregistré.

Un tel procédé d'exécution présente l'avantage de rendre plus difficiles les tentatives d'attaque ou de cryptanalyse par canaux auxiliaires plus connues sous le terme anglais de « side channel attack ». De telles attaques sont par exemple décrites dans les articles suivants :
- C. Clavier : « Side channel analysis for reverse engineering (scare) - an improved attack against a secret a3/a8 gsm algorithm », Cryptology ePrint Archive, Report 2004/049, 2004,
- M. San Pedro et Al : « FIRE : Fault Injection for Reverse Engineering », Springer Berlin Heidelberg, 2011, pp 280-293.

De façon générale, une attaque par canaux auxiliaires consiste à mesurer un une grandeur physique observable pendant le fonctionnement du microprocesseur lorsque celui-ci exécute la fonction prédéterminée attaquée pour en déduire des informations sur le fonctionnement et les données internes de cette fonction prédéterminée. Par exemple, le paramètre observé peut être la consommation électrique ou le rayonnement électromagnétique du microprocesseur.

Le procédé décrit dans US2015/0095659A1 est robuste vis-à-vis des attaques par canaux auxiliaires car le code exécuté pour réaliser la fonction prédéterminée varie d'une exécution à une autre. Ainsi, toute chose identique par ailleurs, cela se traduit par le fait que le paramètre observé varie de façon imprédictible à chaque exécution de la fonction prédéterminée.

Toutefois, en observant dans la mémoire principale, le flot d'instructions généré lors de l'exécution du code machine polymorphique, un attaquant peut quand même obtenir des informations sur le fonctionnement de cette fonction prédéterminée. Par exemple, pour cela, l'attaquant peut désassembler le flot d'instructions généré.

De l'état de la technique est également connu le document WO2005/124506A2 qui décrit la sécurisation d'un flot d'instructions vis-à-vis d'attaques par canaux auxiliaires et propose d'insérer un nombre aléatoire d'instructions dans l'algorithme de cryptage de façon à désynchroniser l'information obtenue via le canal auxiliaire.

L'invention vise à remédier à ce problème en proposant un procédé d'exécution par un microprocesseur d'un code machine polymorphique qui soit robuste vis-à-vis des attaques par désassemblage du flot d'instructions généré et vis-à-vis des attaques par canaux auxiliaires.

Elle a donc pour objet un procédé conforme à la revendication 1.

Dans le procédé revendiqué, le code exécuté pour réaliser la fonction prédéterminée varie d'une exécution à une autre. Ainsi, le procédé revendiqué conserve sa robustesse vis-à-vis des attaques par canaux auxiliaires.

De plus, dans le procédé revendiqué, le flot d'instructions généré qui réalise la fonction prédéterminée est présent dans la mémoire principale uniquement sous forme chiffrée. Ainsi, les tentatives d'attaque par désassemblage des instructions du flot d'instructions généré sont rendues plus difficiles.

De plus, la valeur du vecteur d'initialisation du module de chiffrement varie d'un bloc de base à un autre bloc de base dans le flot d'instructions généré. Ainsi, la totalité du flot d'instructions généré n'est pas chiffrée de la même façon, ce qui rend plus difficile toute tentative de cryptanalyse du flot d'instructions chiffré enregistré dans la mémoire principale.

Enfin, un bloc de base n'est déchiffré que s'il est exécuté. A l'inverse, un bloc de base n'est jamais déchiffré s'il n'est pas exécuté. Le procédé revendiqué évite donc de déchiffrer systématiquement l'ensemble du flot chiffré, ce qui rend son exécution plus rapide.

Les modes de réalisation de ce procédé peuvent présenter une ou plusieurs des caractéristiques des revendications dépendantes de procédé.

L'invention a également pour objet un code machine polymorphique pour la mise en œuvre du procédé revendiqué.

L'invention a également pour objet un support d'enregistrement d'informations comportant le code machine polymorphique.

L'invention a également pour objet un appareil électronique pour la mise en œuvre du procédé revendiqué.

L'invention sera mieux comprise à la lecture de la description qui va suivre, donnée uniquement à titre d'exemple et faite en référence aux figures suivantes :
- la figure 1 est une illustration schématique d'un appareil électronique comportant un microprocesseur et un support d'enregistrement d'informations ;
- la figure 2 est une illustration schématique d'un code machine polymorphique apte à être exécuté par l'appareil de la figure 1 ;
- la figure 3 est un organigramme d'un procédé de construction et d'exécution du code machine polymorphique de la figure 2 ;
- la figure 4 est une illustration, en langage évolué, du code d'une fonction prédéterminée ;
- la figure 5 est un organigramme d'un procédé de chiffrement par flot mis en œuvre dans le procédé de la figure 3 ;
- la figure 6 est une illustration en langage évolué de la fonction prédéterminée de la figure 4 après sa transformation par le procédé de la figure 5 ;
- la figure 7 est un organigramme d'un procédé de déchiffrement par flot mis en œuvre dans le procédé de la figure 3 ;
- les figures 8, 9 et 10 sont des organigrammes d'autres modes de réalisation possibles d'un procédé de chiffrement par flot utilisable dans le procédé de la figure 3.

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé par un compilateur en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation préalable.

Un « flot d'instructions » est une succession d'instructions classées les unes après les autres et qui forme, en code machine, une suite ordonnée de bits. Le flot d'instructions débute par une instruction initiale et se termine par une instruction finale. Par rapport à une instruction donnée du flot d'instructions, les instructions situées du côté de l'instruction initiale sont appelées « instruction amont » et les instructions situées du côté de l'instruction finale, sont appelées « instructions aval ». Dans ce texte, ce flot d'instructions en mémoire est découpé en une succession de blocs de base immédiatement consécutifs ou séparés par des blocs de données.

Dans ce texte, un « bloc de base » est un groupe d'instructions successives du flot d'instructions qui débute à une adresse de branchement et qui se termine par une instruction de branchement. Ainsi, l'exécution d'un bloc de base débute systématiquement par l'exécution de l'instruction située à son adresse de branchement et se termine systématiquement par l'exécution de l'instruction de branchement qui termine ce bloc de base. De préférence, un bloc de base ne comporte pas d'autres instructions de branchement que celle située à la fin de ce bloc de base. Ainsi, les instructions d'un bloc de base sont systématiquement toutes lues par le processeur les unes après les autres dans l'ordre où elles sont présentes dans ce bloc de base. Toutefois, un bloc de base peut aussi contenir une ou plusieurs instructions de branchement conditionnel avant sa dernière instruction de branchement. La notion de bloc de base telle qu'elle est définie ici s'applique aux parties du flot d'instructions qui sont chiffrées. S'il existe des parties non chiffrées du flot d'instructions, alors dans ces parties non chiffrées, il n'est pas nécessaire qu'un bloc de base débute à une adresse de branchement.

Une « instruction de branchement » est une instruction qui, lorsqu'elle est exécutée par le microprocesseur, déclenche un saut vers l'adresse de branchement d'un autre bloc de base du flot d'instructions. Cette instruction de branchement comporte donc au moins l'adresse de branchement de cet autre bloc de base. Typiquement, à cet effet, cette instruction remplace la valeur actuelle du compteur ordinal par la valeur de l'adresse de branchement. On rappelle que le compteur ordinal contient l'adresse de la prochaine instruction à exécuter par le microprocesseur. En absence d'instruction de branchement, le compteur ordinal est incrémenté de 1 à chaque fois qu'une instruction est exécutée. En absence d'instruction de branchement, les instructions sont systématiquement exécutées séquentiellement les unes après les autres dans l'ordre où elles sont enregistrées dans une mémoire principale. L'instruction de branchement peut être inconditionnelle, c'est à dire que le saut vers l'adresse de branchement est systématiquement réalisé dès que cette instruction est exécutée. Une instruction de branchement inconditionnel est par exemple l'instruction « JMP » en assembleur. L'instruction de branchement peut aussi être conditionnelle, c'est-à-dire que le saut vers l'adresse de branchement est déclenché lors de son exécution uniquement si une condition particulière est vérifiée. Par exemple, une instruction de branchement conditionnel est une instruction « JE », « JA» ou « JNE » en assembleur. L'instruction de branchement peut aussi bien être un appel à une fonction. Dans ce texte, le terme « instruction de branchement » désigne aussi bien les instructions de branchement direct qu'indirect. Une instruction de branchement direct est une instruction de branchement qui contient directement la valeur numérique de l'adresse de branchement. Une instruction de branchement indirect, est une instruction de branchement vers une adresse de branchement contenue dans une mémoire ou un registre du microprocesseur. Ainsi, contrairement à une instruction de branchement direct, une instruction de branchement indirect ne contient pas directement la valeur numérique de l'adresse de branchement.

On appelle « instruction de branchement aval », une instruction qui provoque, lorsqu'elle est exécutée par un microprocesseur, un saut vers une instruction aval dans le flot d'instructions.

On appelle « instruction de branchement amont », une instruction qui provoque, lorsqu'elle est exécutée par un microprocesseur, un saut vers une instruction amont du flot d'instructions.

Une « adresse de branchement » est l'adresse dans la mémoire principale à laquelle se trouve la première instruction d'un bloc de base.

On parlera d'exécution d'une fonction pour désigner l'exécution des instructions réalisant cette fonction.

Dans un souci de simplification, dans cette description, ces instructions ne sont pas représentées sous forme binaire, mais plutôt sous une forme symbolique exprimée dans un langage évolué de plus haut niveau. En particulier, l'opcode est représenté de façon connue par un mnémonique.

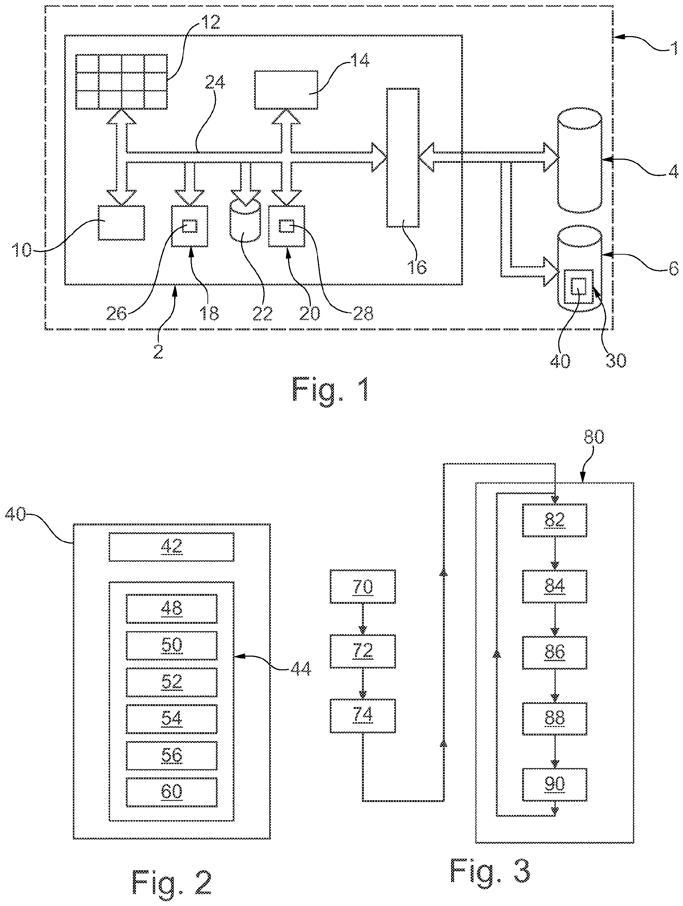

La figure 1 représente un appareil électronique 1 comportant un microprocesseur 2, une mémoire principale 4 et un support 6 d'enregistrement d'informations. Par exemple, l'appareil 1 est un ordinateur, un smartphone, une tablette électronique ou similaire.

Le microprocesseur 2 comporte ici :
- une unité arithmétique et logique 10 ;
- un ensemble 12 de registres ;
- un module de commande 14 ;
- une interface 16 d'entrée/sortie de données,
- un module 18 public de chiffrement par flot,
- un module 20 privé de déchiffrement par flot, et
- une mémoire sécurisée 22 non volatile uniquement accessible par les modules 18 et 20.

La mémoire 4 est configurée pour stocker des instructions devant être exécutées par l'unité 10. Ici, la mémoire 4 est une mémoire non sécurisée. Par « mémoire non sécurisée », on désigne le fait qu'un programme utilisateur peut accéder au contenu de cette mémoire et en lire le contenu. Typiquement, la mémoire 4 est une mémoire volatile. Le compteur ordinal du microprocesseur 2 pointe sur cette mémoire 4. L'unité 10 est notamment configurée pour exécuter les instructions enregistrées dans la mémoire 4, dans l'ordre où ces instructions sont enregistrées dans la mémoire 4, et, le cas échéant, pour enregistrer le résultat de ces instructions exécutées dans un ou plusieurs des registres 12. Ici, on considère qu'une instruction, pour être exécutée par l'unité 10, doit être placée dans la mémoire 4. Dans cette description, on utilisera comme synonymes « exécution par le microprocesseur 2 » et « exécution par l'unité 10 ». La mémoire 4 peut être une mémoire externe au microprocesseur 2 comme représenté sur la figure 1. Dans ce cas, la mémoire 4 est réalisée sur un substrat mécaniquement séparé du substrat sur lequel sont réalisés les différents éléments du microprocesseur 2 comme l'unité 10. Toutefois, en variante, la mémoire 4 peut aussi être une mémoire interne intégrée à l'intérieur du microprocesseur 2. Dans ce dernier cas, elle est réalisée sur le même substrat que les autres éléments du microprocesseur 2. Enfin, dans d'autre configuration, la mémoire 4 se compose de plusieurs mémoires dont certaines sont des mémoires internes et d'autres des mémoires externes.

Le module 14 est configuré pour déplacer des instructions entre l'ensemble 12 de registres et l'interface 16. A cet effet, le microprocesseur 2 comporte également ici un bus d'échange de données 24.

L'interface 16 est notamment apte à acquérir des données, par exemple depuis la mémoire 4 et le support 6 extérieurs au microprocesseur 2.

Le support 6 est aussi une mémoire non sécurisée. Typiquement, il s'agit d'une mémoire non sécurisée non volatile. Par exemple, elle est du type EEPROM ou Flash. Elle contient ici un code exécutable 30 d'un programme exécutable par le microprocesseur 2. Ce code exécutable 30 contient le code machine polymorphique d'une ou plusieurs fonctions prédéterminées. Pour simplifier l'illustration, seul un code machine polymorphique 40 est représenté sur la figure 1.

Le module de chiffrement 18 est un module de chiffrement par flot également connu sous le terme anglais de « stream cipher », c'est-à-dire qu'il chiffre les bits d'un flot d'instructions au fur et à mesure qu'ils arrivent sans attendre qu'un bloc de bits d'une longueur supérieure à un seuil prédéterminé soit entièrement reçu. Typiquement, le seuil prédéterminé est strictement supérieur à 1 et généralement supérieur à 32, 64 ou plus. Ici, le module de chiffrement 18 est un module de chiffrement matériel réalisé sur le même substrat ou la même puce que l'unité arithmétique et logique 10. Par exemple, le module 18 est le module de chiffrement connu sous le nom de « Trivium ». Pour plus d'informations sur ce module de chiffrement 18, le lecteur peut se référer à l'article suivant : Christophe De Canniere et Bart Preneel : « TRIVIUM Specifications », eSTREAM, ECRYPT Stream Cipher Project, 2006.

Ainsi, par la suite, seul le principe de fonctionnement du module 18 est rappelé. Le module 18 comporte :
- un générateur 26 de séquences pseudo-aléatoire,
- un vecteur d'initialisation dont la valeur courante est notée IV_{c} par la suite, et
- une clé secrète k.

La séquence pseudo-aléatoire générée varie en fonction de la valeur courante IV_{c} du vecteur d'initialisation et de la clé secrète k. Lors du chiffrement d'un flot d'instructions, chaque bit de ce flot d'instructions entrant dans le module 18 est combiné avec le dernier bit généré de la séquence pseudo-aléatoire. Cette séquence pseudo-aléatoire s'allonge d'un bit à chaque fois qu'un bit entrant du flot d'instructions est reçu. Pour combiner ces deux bits, le chiffrement Trivium utilise l'opération « ou exclusif », notée XOR. Au cours du chiffrement d'un flot d'instructions, la valeur du vecteur d'initialisation peut être renouvelée, c'est-à-dire que sa valeur peut être modifiée. Par contre, dans ce mode de réalisation, pour simplifier la description, on suppose que la clé secrète k n'est jamais modifiée. Par exemple, elle est enregistrée dans la mémoire 22 lors de la fabrication du microprocesseur 2. Le module 18 peut être appelé par un programme utilisateur pour chiffrer un flux d'instructions avec une valeur IV_{c} du vecteur d'initialisation imposée par ce programme utilisateur. Pour cela, le microprocesseur 2 est modifié de manière à pouvoir exécuter lors du chiffrement d'un flux d'instructions :
- une instruction de renouvellement notée Init(IV), et
- une instruction de chiffrement Encrypt(m).

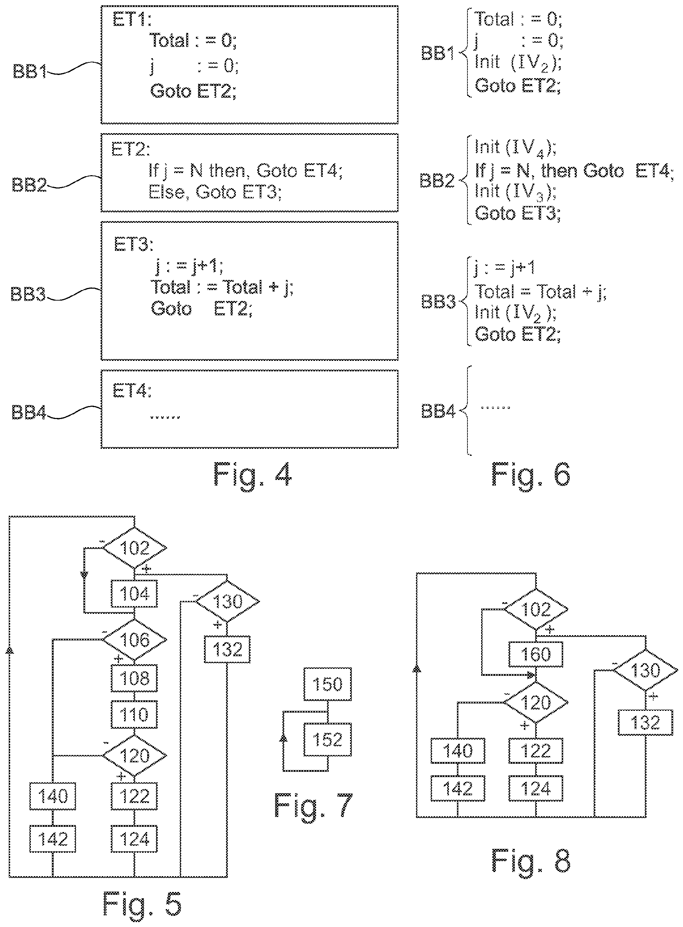

Lorsque l'unité arithmétique et logique 10 exécute l'instruction Init(IV), en réponse, la valeur IV est enregistrée dans un registre 12 ou dans la mémoire 22. Le fonctionnement de cette instruction lors du chiffrement et du déchiffrement est décrit plus en détail en référence aux figures 5 et 7.

Lorsque l'instruction Encrypt(m) est exécutée par l'unité arithmétique et logique 10, les bits du mot m sont transmis les uns après les autres au module 18 qui, en réponse, retourne les bits les uns après les autres d'un cryptogramme M du mot m obtenu en combinant bit à bit le mot m avec le mot de même longueur le plus récemment généré par le générateur 26.

Le module 20 est un module de déchiffrement par flot qui réalise l'opération inverse de celle réalisée par le module 18. Il permet donc de déchiffrer un flot d'instructions chiffré par le module 18 lorsqu'il est initialisé avec le même vecteur d'initialisation que celui utilisé par le module 18 pour chiffrer ce même flot d'instructions. À cet effet, il comporte :
- son propre générateur 28 de séquences pseudo-aléatoire identique au générateur 26,
- son propre vecteur d'initialisation qui peut prendre, au même instant, une valeur différente de celle du vecteur d'initialisation du module 18, et
- la même clé secrète k.

Contrairement au module 18, le module 20 ne peut pas être directement appelé par un programme utilisateur. Autrement dit, il n'existe pas d'instruction qui permette de lancer explicitement le déchiffrement d'une instruction. Plus précisément, à partir du moment où un mode chiffré du microprocesseur 2 est activé, le module 20 est systématiquement appelé pour déchiffrer la prochaine instruction à exécuter avant que celle-ci soit transmise à l'unité arithmétique et logique 10 pour y être exécutée. Il n'est donc pas nécessaire de disposer d'une instruction Decrypt(m) permettant d'appeler explicitement le module 20 pour déchiffrer le message m.

La figure 2 représente plus en détail le code machine polymorphique 40 d'une fonction prédéterminée destiné à être exécutée par le microprocesseur 2. Pour les principes généraux sur la structure et le fonctionnement d'un tel code machine polymorphique 40, le lecteur peut se référer à la demande US2015/0095659A1. Par conséquent, seuls les détails nécessaires à la compréhension de l'invention sont décrits plus précisément.

Le code 40 comporte une succession d'instructions aptes à être exécutées par le microprocesseur 2. Ainsi, ce code 40 est caractérisé par les instructions enregistrées sur le support 6.

Plus précisément, le code 40 comporte :
- un bloc 42 d'instructions pour acquérir une valeur numérique apte à varier d'une exécution à la suivante du code 40, et
- au moins un bloc d'instructions, appelé générateur 44 spécifique, apte à générer, lorsqu'il est exécuté par le microprocesseur 2, un flot d'instructions, dites instructions cibles, qui réalise la fonction prédéterminée lorsque ces instructions cibles sont à leur tour exécutées par le microprocesseur 2.

Ici, le bloc 42 obtient un aléa numérique (« random number » en langue anglaise) en tant que valeur numérique apte à varier d'une exécution à une autre du code 40. Par exemple, le bloc 42 acquiere l'aléa numérique à partir d'une source de nombres pseudo-aléatoires. Cet aléa numérique est un nombre pseudo-aléatoire entier supérieur ou égal à 0 et inférieur ou égal à un seuil « RAND_MAX ».

Le générateur 44 comporte ici :
- un bloc d'instructions codant une pluralité de variantes 48 de codage de la fonction prédéterminée,
- des instructions de sélection 50 ;
- un module 52 d'allocation de registres ;
- un module 54 de traduction d'instructions ;
- un module d'ordonnancement d'instructions, par la suite, appelé « ordonnanceur 56 », et
- un bloc d'instructions 60, dit de contrôle, aptes à placer dans la mémoire 4 le flot d'instructions cibles généré.

Les instructions de sélection 50 et les modules 52, 54, 56 sont par exemple identiques à ceux déjà décrits dans la demande US2015/095659A1. Ainsi, seules quelques explications sur leur fonctionnement sont rappelées ici.

Chacune des variantes 48 génère, lorsqu'elle est exécutée par le microprocesseur 2, un flot spécifique d'instructions cibles réalisant la fonction prédéterminée. Chaque variante de codage est ainsi apte à produire un flot spécifique d'instructions qui est différent du flot d'instructions cibles généré par les autres variantes de codage mais qui sont tous fonctionnellement équivalents. Deux flots d'instructions sont dits fonctionnellement équivalents s'ils produisent systématiquement, lorsqu'ils sont exécutés par le microprocesseur 2, le même résultat à partir des mêmes données en entrée. Chacun de ces flots spécifiques d'instructions cibles se distingue les uns des autres par au moins :
- un opcode différent, ou
- une valeur littérale différente, ou
- un nombre d'instructions différent.

Les instructions 50 permettent de choisir, parmi la pluralité de variantes 48, en fonction de l'aléa numérique acquis par l'exécution des instructions 42, une variante de codage à exécuter pour générer le flot spécifique d'instructions cibles.

Le module 52 est un bloc d'instructions configuré pour allouer, lorsqu'il est exécuté par le microprocesseur 2, un ou plusieurs registres de l'ensemble 12 pour l'exécution d'instructions sur l'unité 10. Un tel module 52 est connu en soi. Ce module 52 réalise cette affectation notamment en fonction d'une valeur d'un aléa numérique. Par exemple, ce module 52 comporte des instructions aptes à modifier, en fonction de la valeur de l'aléa numérique, la valeur d'un opérande d'une instruction correspondant à l'identifiant d'un registre mémoire de l'ensemble 12. Ici, à cet effet, le module 52 comporte un bloc d'instructions pour acquérir une valeur d'un aléa numérique. Par exemple, ce module 52 est réalisé en implémentant les fonctionnalités du procédé de renommage de registre décrites dans le document WO02/054228 A1. A titre d'exemple, ce module 52 associe un registre « r5 » de l'ensemble 12 à un identifiant « A » de registre si la valeur de l'aléa numérique est paire et, sinon, il l'associe à un registre « r9 ».

Le module 54 est un bloc d'instructions configuré pour générer les instructions cibles à partir des variantes de codage 48.

L'ordonnanceur 56 est un bloc d'instructions configuré pour modifier, en fonction d'un aléa numérique, l'ordre dans lequel les instructions cibles doivent être exécutées par l'unité 10. Cet ordonnanceur 56 reçoit en entrée :
- une valeur d'un aléa numérique, et
- une ou plusieurs instructions générées par le module 54 et auxquelles le module 52 a affecté un ou plusieurs registres.

Cet ordonnanceur 56 fournit en sortie les instructions cibles dans l'ordre où elles doivent être exécutées par le microprocesseur 2. Ces instructions cibles placées les unes après les autres dans l'ordre où elles doivent être exécutées sont enregistrées, par l'ordonnanceur 56, dans une file d'attente. Par la suite, cette succession d'instructions cibles placées les unes après les autres dans l'ordre où elles doivent être exécutées forme le flot d'instructions à exécuter pour réaliser la fonction prédéterminée. Cette file d'attente est réalisée à partir de registres internes du microprocesseur 2. Par exemple, la file d'attente est réalisée à l'aide de plusieurs registres de l'ensemble 12. A ce stade, le flot d'instructions généré n'est pas chiffré.

Le bloc 60 d'instructions de contrôle se charge ici de chiffrer chaque instruction du flot d'instructions avant de les enregistrer dans la mémoire 4. Les opérations réalisées par le bloc 60, lorsqu'il est exécuté par le microprocesseur 2, sont décrites plus en détail en référence aux figures 3 à 7.

Par exemple, le code 40 est construit à l'aide d'une version modifiée du logiciel « deGoal ». Ce logiciel « deGoal » permet notamment de créer un générateur de code machine polymorphique. Le principe de fonctionnement de ce logiciel est décrit dans les articles suivants :
- Henri-Pierre Charles, Damien Couroussé, Victor Lomüller, Fernando A. Endo, and Rémi Gauguey "deGoal a Tool to Embed Dynamic Code Generators into Applications," in Compiler Construction, 2014, vol. 8409.
- Damien Couroussé, Victor Lomüller, and Henri-Pierre Charles "Introduction to Dynamic Code Génération - an Experiment with Matrix Multiplication for the STHORM Platform," in Smart Multicore Embedded Systems, Springer Verlag, 2013, pp. 103-124.
Dans ces articles, le générateur 44 est désigné sous le terme de « compilette » et le flot d'instructions cibles est désigné sous le terme de « kernel ».

Ce logiciel « deGoal » est cependant modifié de façon à ce que la génération du code :
- ne dépende pas de données fournies en entrée de la fonction prédéterminée à exécuter,
- dépende d'un ou plusieurs aléas numériques, et
- chiffre le flot d'instructions généré enregistré dans la mémoire 4.

Un exemple de génération et d'exécution du code 40 va maintenant être décrit plus en détail en référence à l'organigramme de la figure 3.

Lors d'une étape 70, le programme 30 devant être exécuté est acquis automatiquement par un ordinateur afin d'y être compilé. Cet ordinateur peut être l'appareil 1 ou être un appareil distinct de l'appareil 1.

Ici, le programme 30 comporte une fonction prédéterminée à exécuter sur le microprocesseur 2 de façon sécurisée et, notamment, de manière à être le plus résistant possible contre des attaques par canal auxiliaire et contre des attaques par désassemblage d'instructions dans la mémoire 4. Souvent, cette fonction prédéterminée est une primitive cryptographique telle que l'algorithme de chiffrement connu sous le nom « Advanced Encryption Standard » (AES). Toutefois, pour simplifier les explications, par la suite, la description est faite dans le cas particulier où cette fonction prédéterminée est une fonction qui calcule la somme des entiers positifs compris entre 1 et N. Les explications données dans ce cas particulier s'appliquent à toute autre fonction prédéterminée.

Dans cet exemple, lors de l'étape 70, la fonction prédéterminée est d'abord acquise sous la forme d'un code source puis compilée pour former le code machine polymorphique 40. Cette étape 70 est, par exemple, réalisée comme décrit dans la demande US2015/095659A1.

A l'issue de cette étape, lors d'une étape 72, le code 40 est chiffré. Par exemple, le code 40 est chiffré en mettant en œuvre un chiffrement par flot. Ici, pour simplifier l'exécution du code 40 sur le microprocesseur 2, le code 40 est chiffré en mettant en œuvre un chiffrement par flot identique à celui qui sera utilisé lors de l'exécution du code 40 par le microprocesseur 2. A cet effet, un module de chiffrement par flot identique au module 18 est utilisé. En particulier, le code 40 est chiffré en utilisant la même clé secrète k que celle utilisée par les modules 18 et 20 et enregistrée dans la mémoire sécurisée 22. Ce chiffrement par flot mis en œuvre lors de l'étape 72 est décrit en détail plus loin dans le cas particulier où il est utilisé pour chiffrer le flot d'instructions généré par l'exécution du générateur 44.

Lors d'une étape 74, le programme 30 et le code 40 chiffré sont enregistrés sur le support 6.

Une phase 80 d'exécution du programme 30 et du code 40 par le microprocesseur 2 peut alors débuter.

Tout d'abord, lors d'une étape 82, juste avant le début de l'exécution du code 40, le microprocesseur 2 passe dans un mode de fonctionnement appelé « mode chiffré ». Lorsque le microprocesseur 2 est dans ce mode, chaque instruction à exécuter est d'abord déchiffrée avant d'être exécutée. A l'inverse, dans un mode de fonctionnement appelé « mode non-chiffré », les instructions à exécuter sont chargées depuis la mémoire 4 vers le microprocesseur 2 et sont exécutées sans procéder au préalable à leur déchiffrement. Pour basculer entre les modes chiffré et non-chiffré, le microprocesseur 2 est apte :
- à exécuter une instruction Enable_Encrypt qui bascule le microprocesseur 2 du mode non-chiffré vers le mode chiffré immédiatement après la fin du bloc de base en cours d'exécution
   , et
- à exécuter une instruction Disable_Encrypt qui bascule le microprocesseur 2 du mode chiffré vers le mode non-chiffré immédiatement après la fin du bloc de base en cours d'exécution.

L'instruction Enable_Encrypt peut se trouver à n'importe quel endroit du bloc de base en cours d'exécution, et être exécutée à n'importe quel moment au cours de l'exécution de ce bloc de base. Le basculement vers le mode chiffré se fait toujours lors de l'exécution de la prochaine instruction de branchement. Il n'est donc pas nécessaire que l'instruction Enable_Encrypt se trouve immédiatement avant la fin du bloc de base en cours d'exécution.

Par exemple, ici, le programme 30 comporte une instruction Enable_Encrypt et une instruction Init(IV₀) juste avant le début du code 40 et une instruction Disable_Encrypt juste à la fin du code 40. Ainsi, lors du passage dans le mode chiffré, le vecteur d'initialisation du module 20 est initialisé avec la valeur IV₀.

Ensuite, lors d'une étape 84, le code 40 chiffré est transféré dans la mémoire 4 et une étape 86 d'exécution du code 40 débute.

Lors de l'étape 86, à chaque fois que le microprocesseur charge depuis la mémoire 4 une instruction à exécuter, le module 20 déchiffre d'abord cette instruction puis l'instruction déchiffrée est transmise à l'unité arithmétique et logique 10 qui l'exécute. Ici, le déchiffrement des instructions du code 40 est mis en œuvre comme décrit plus en détail dans le cas du déchiffrement du flot d'instructions généré par le générateur 44.

En particulier, lors de l'étape 86, le microprocesseur 2 exécute le générateur 44. En réponse, le générateur 44 génère un flot d'instructions apte, lorsqu'il est exécuté à son tour par le microprocesseur 2, à réaliser la fonction prédéterminée.

La génération de ce flot d'instructions se déroule comme décrit dans la demande de US2015/0095659A1. En particulier, lors de la génération du flot d'instructions, le générateur 44 sélectionne de façon aléatoire une variante de codage du flot d'instructions parmi une pluralité de variantes 28 possibles. Ainsi, d'une exécution à la suivante, le codage du flot d'instructions généré varie, ce qui rend difficile toute tentative d'attaque par observation de canaux auxiliaires. De plus, ici, les registres utilisés et l'ordonnancement du flot d'instructions varient aléatoirement à chaque exécution du générateur 44. Ceci rend donc encore plus difficile la cryptanalyse de la fonction prédéterminée par observation de canaux auxiliaires.

Après l'exécution de l'ordonnanceur 56, le flot d'instructions généré est enregistré dans une file d'attente formée dans l'ensemble 12 de registres. Dans cette file d'attente, les instructions du flot d'instructions généré sont «en clair», c'est-à-dire qu'elles ne sont pas chiffrées et donc directement exécutables par l'unité arithmétique et logique 10.

L'exécution du bloc de contrôle 60 conduit alors à chiffrer, au fur et à mesure qu'elles sont générées, les instructions du flot d'instructions contenues dans la file d'attente, en mettant en œuvre un chiffrement par flot exécuté par le module 18, puis à transférer les instructions nouvellement chiffrées vers la mémoire 4. Dès lors, le flot d'instructions enregistré dans la mémoire 4 est chiffré, ce qui rend plus difficile toute tentative de cryptanalyse par désassemblage des instructions du flot d'instructions généré. Le chiffrement du flot d'instructions généré est décrit plus en détail en référence à la figure 5.

Ensuite, lors d'une étape 88, le flot d'instructions chiffré contenu dans la mémoire 4 est exécuté par le microprocesseur 2.

Lors de cette étape 88, à chaque fois que le microprocesseur 2 charge depuis la mémoire 4 une instruction du flot d'instructions chiffré, celle-ci est d'abord déchiffrée par le module 20 puis exécutée par l'unité arithmétique et logique 10. Le déchiffrement des instructions du flot d'instructions chiffré est décrit plus en détail en référence à la figure 7.

Typiquement, le code 40 se termine par l'instruction Disable_Encrypt puis une instruction de branchement. Aussi, lorsque l'exécution du code 40 est terminée, lors d'une étape 90, le microprocesseur 2 retourne dans le mode non-chiffré puis poursuit l'exécution du programme 30.

Lors de la même exécution du programme 30, le code 40 peut être exécuté plusieurs fois. Aussi, lors de la même exécution du programme 30, les étapes 82 à 90 peuvent être réitérées plusieurs fois.

Le chiffrement et le déchiffrement du flot d'instructions généré par l'exécution du générateur 44 vont maintenant être décrits dans le cas particulier du flot d'instructions représenté sur la figure 4.

La figure 4 représente le flot d'instructions de la fonction prédéterminée écrit dans un langage de haut niveau comme, par exemple, en langage C. Les symboles « ET1 », « ET2 », « ET3 » et « ET4 » sont des étiquettes ou « label » en anglais vers lesquelles une instruction de branchement peut renvoyer. Le flot d'instructions est divisé en une succession de blocs de base ou « basic block » en anglais. Sur la figure 4, les différents blocs de base de la fonction prédéterminée portent les références BB1, BB2, BB3 et BB4. Sur cette figure, les instructions de branchement correspondent aux instructions « Goto ET2», « If i=N, then Goto ET4 Else Goto ET3 » et « Goto ET2 ». Plus précisément, ici l'instruction « Goto ET2 » est une instruction de branchement aval inconditionnelle. L'instruction « If i=N, then Goto ET4 Else Goto ET3 » correspond à une instruction de branchement aval conditionnel « If i = N, then Goto ET4 » et à une instruction de branchement amont conditionnel « If i ≠ N, then Goto ET3 ». Par la suite, elle est donc traitée comme une succession de deux instructions de branchement. L'instruction « Goto ET2 » est une instruction de branchement amont inconditionnelle. Chaque bloc de base se termine par une instruction de branchement et ne comporte au plus qu'une seule instruction de branchement inconditionnel. Entre deux blocs de base immédiatement successifs dans le flot d'instructions généré, il est normalement inutile d'ajouter une instruction de branchement aval inconditionnel vers le bloc de base immédiatement consécutif. Toutefois, pour respecter systématiquement la syntaxe d'un bloc de base chiffré telle que définie dans cette demande, le générateur 44 est apte à ajouter, si celle-ci n'est pas déjà présente, une instruction de branchement inconditionnel vers le bloc de base suivant à la fin du bloc de base précédent. En effet, comme cela est expliqué plus loin, dans le mode chiffré, l'instruction de branchement est utilisée par le bloc de contrôle 60 pour identifier la fin d'un bloc de base. Elle doit donc être systématiquement présente à la fin de chaque bloc de base dans les cas où :
(1) le bloc de base généré sera chiffré, ou
(2) le bloc de base contient une instruction Enable_Encrypt ou Disable_Encrypt afin de garantir le changement de mode d'exécution lors du passage au bloc de base suivant.
C'est donc pour cette raison que le bloc BB1 se termine par une instruction de branchement inconditionnel vers le bloc BB2.

Il existe plusieurs possibilités pour introduire systématiquement une instruction de branchement à la fin d'un bloc de base. Par exemple, dans un premier mode de réalisation, lorsque le bloc de contrôle 60 rencontre le début d'un bloc de base suivant sans que la fin du bloc de base précédent contienne une instruction de branchement, il ajoute automatiquement dans le flot d'instructions et à la fin du bloc de base précédent, une instruction de branchement inconditionnelle vers le bloc de base suivant. Le début d'un bloc de base est détecté par la présence d'une étiquette qui permet de sauter directement d'un autre bloc de base du code 40 vers ce bloc de base.

Le symbole « ... » dans le bloc BB4 indique que la représentation des instructions contenues dans ce bloc a été omise.

Notons qu'il ne s'agit que d'une description générique de la fonction prédéterminée. Le flot d'instructions spécifique utilisé pour réaliser cette fonction prédéterminée n'est connu qu'au moment de l'exécution du générateur 44 par le microprocesseur 2.

La figure 5 présente un procédé de chiffrement par flot du flux d'instructions généré par l'exécution du générateur 44. Ce procédé est adapté au cas où les blocs de base à chiffrer ne comportent aucune instruction de branchement indirect et aucun appel à une fonction. Dans ce procédé, le bloc de contrôle 60 traite dans l'ordre les instructions successives du flux d'instructions généré depuis l'instruction initiale jusqu'à l'instruction finale de ce flot.

Plus précisément, initialement, le bloc de contrôle 60 initialise la valeur du vecteur d'initialisation du module 18 avec la valeur IV₀ enregistrée dans l'ensemble 12 ou dans la mémoire 22 par l'exécution de l'instruction Init(IV₀). À ce stade, la valeur du vecteur d'initialisation du module 18 est donc égale à IV₀.

Ensuite, le bloc de contrôle 60 traite les instructions du flot d'instructions généré contenu dans l'ensemble 12 de registre les unes après les autres.

Lors d'une étape 102, à chaque fois qu'une nouvelle instruction est traitée par le bloc de contrôle 60, il vérifie si l'adresse de cette instruction est une adresse de branchement. L'adresse de l'instruction et l'adresse de branchement sont des adresses relatives par rapport au début du flot d'instructions généré. Par exemple, chaque adresse est un numéro d'ordre de l'instruction compté à partir de l'instruction initiale du flot d'instructions généré.

Lors d'une étape 104, si l'adresse de l'instruction traitée correspond à une adresse de branchement, le bloc de contrôle 60 obtient une valeur numérique IVᵢ qu'il associe à cette adresse de branchement. Typiquement, cette valeur numérique IVᵢ est différente, ou presque toujours différente, des valeurs numériques associées aux autres adresses de branchement. Par exemple, pour cela, la valeur numérique IVᵢ est un aléa numérique obtenu, par exemple, de la même façon que lors de l'étape 86.

Ensuite, cette adresse de branchement est associée à cette valeur numérique IVᵢ. Par exemple, cette adresse de branchement est enregistrée dans une table TA associée à la valeur numérique IVᵢ. Ici, à titre d'illustration, la même table TA est aussi utilisée pour associer l'étiquette correspondant à cette adresse de branchement et la valeur numérique de cette adresse de branchement. On rappelle ici qu'une adresse de branchement est une valeur numérique alors que l'étiquette est un symbole identifiant l'adresse de branchement.

Finalement, le bloc de contrôle 60 transmet une instruction Init(IVᵢ) à l'unité arithmétique et logique 10. En réponse, l'unité arithmétique et logique 10 l'exécute, ce qui provoque le remplacement immédiat de la valeur précédente du vecteur d'initialisation du module 18 par la valeur IVᵢ. La valeur IVᵢ devient donc la valeur courante IV_{c}. Ainsi, toutes les instructions suivantes du bloc de base qui débutent à cette adresse de branchement sont chiffrées en utilisant la valeur IVᵢ pour le vecteur d'initialisation du module 18.

Ensuite, lors d'une étape 106, le bloc de contrôle 60 vérifie si l'instruction traitée est une instruction de branchement.

Dans l'affirmatif, il procède à une étape 108. Lors de l'étape 108, le bloc de contrôle 60 relève l'étiquette vers laquelle l'instruction de branchement redirige. Par exemple, ici, l'étiquette relevée est l'une des étiquettes ET1, ET2, ET3 ou ET4. Si l'étiquette relevée est déjà associée dans la table TA à une adresse de branchement, alors l'étiquette est remplacée, dans l'instruction de branchement, par l'adresse de branchement correspondante qui lui est associée. Ce cas de figure correspond au cas d'une instruction de branchement amont. De plus, dans le cas d'une étiquette de branchement amont, l'adresse de branchement est déjà associée à une valeur IVᵢ du vecteur d'initialisation.

Si l'étiquette relevée n'est pas déjà associée dans la table TA à une adresse de branchement, alors cela signifie que l'instruction de branchement traitée est une instruction de branchement aval. Si l'étiquette relevée n'est pas déjà associée à une valeur numérique IVᵢ dans la table TA, alors le bloc de contrôle 60 obtient une nouvelle valeur numérique IVⱼ et associe l'étiquette relevée à cette nouvelle valeur numérique obtenue dans la table TA. Pour cela, par exemple, le bloc de contrôle 60 obtient la nouvelle valeur IVⱼ comme décrit pour l'étape 104.

Ensuite, le bloc de contrôle 60 ajoute dans le flot d'instructions généré, juste avant cette instruction de branchement, une instruction Init(IVⱼ).

Une fois l'étape 108 terminée, lors d'une étape 110, l'instruction Init(IVⱼ) ajoutée est ensuite transmise au module 18 qui la chiffre à l'aide de la valeur courante IV_{c} du vecteur d'initialisation de ce module 18. Une fois chiffrée, l'instruction Init(IVⱼ) est enregistrée dans la mémoire 4 juste après la précédente instruction chiffrée par le module 18.

Dans le cas de l'instruction « If i = N then Goto ET4, Else Goto ET3 », celle-ci est traitée comme la succession de deux instructions de branchement conditionnel. Dans ce cas, juste avant chaque instructions de branchement conditionnel, une instruction Init(IVⱼ) spécifique à son adresse de branchement est ajoutée. Pour cela, par exemple, les étapes 108 et 110 sont réalisées pour chaque adresse de branchement.

Ensuite, lors d'une étape 120, le bloc de contrôle 60 vérifie si l'instruction traitée est une instruction de branchement aval. En effet, dans le cas d'une instruction de branchement amont, la valeur numérique de l'adresse de branchement qui doit être substituée à l'étiquette est immédiatement disponible dans la table TA de sorte que l'instruction de branchement amont peut être immédiatement chiffrée par le module 18. Dans le cas d'une instruction de branchement aval, la valeur numérique de l'adresse de branchement correspondant à l'étiquette n'est pas immédiatement déterminable. En particulier, dans le cas d'un code machine polymorphique, elle dépend des variantes de codage sélectionnées ou qui seront sélectionnées pour des blocs de base situés en aval. Or, selon la variante sélectionnée, le nombre d'instructions de ces blocs de base varie ou peut varier. Ainsi, lorsque le bloc de contrôle 60 rencontre une instruction de branchement aval, il ne peut pas immédiatement remplacer l'étiquette par la valeur numérique de l'adresse de branchement. Par exemple, ce problème se pose dans le cas de l'instruction de « If i = N then Goto ET4 ». En effet, au moment du chiffrement de cette instruction, l'adresse de branchement correspondant à l'étiquette ET4 n'est pas immédiatement déterminable.

Si l'instruction de branchement est une instruction de branchement aval, lors d'une étape 122, le bloc de contrôle 60 réserve dans la mémoire 4 à l'emplacement où doit être enregistrée cette instruction de branchement aval un espace de même taille que cette instruction de branchement.

Ensuite, lors d'une étape 124, une fonction de rappel Recall(IV_{c}, nₒ) est associée à l'étiquette ET4. Cette fonction Recall(IV_{c}, nₒ) est paramétrée par :
- la valeur IV_{c} courante du vecteur d'initialisation du module 18, et
- par un nombre nₒ identifiant la position du groupe de bits de la séquence pseudo-aléatoire générée par le générateur 26 à combiner avec cette instruction de branchement aval pour obtenir son cryptogramme.

Ce cryptogramme doit être identique à celui qui aurait été obtenu si l'adresse de branchement avait été immédiatement déterminable au moment où l'on cherche à chiffrer pour la première fois cette instruction de branchement aval. Ici, le nombre nₒ est le numéro d'ordre de cette instruction de branchement aval compté à partir de la première instruction chiffrée en utilisant la valeur IV_{c} du vecteur d'initialisation, c'est-à-dire à partir de la première instruction du bloc de base en cours de chiffrement.

Ici, on suppose que toutes les instructions ont la même longueur et que cette longueur est égale à la longueur d'un mot. Par exemple, la longueur d'un mot est constante et égale à 32 bits. Dès lors, à partir de la connaissance du nombre nₒ, il est possible de déterminer la position, dans la séquence pseudo-aléatoire générée, des 32 bits à combiner avec cette instruction de branchement aval pour la chiffrer.

Par exemple, chaque fonction de rappel est associée à une étiquette grâce à une table qui contient sur la même ligne l'étiquette et l'adresse de la fonction de rappel à appeler.

En parallèle, lors d'une étape 130, à chaque fois qu'une nouvelle étiquette est associée à la valeur numérique d'une adresse de branchement dans la table TA lors de l'étape 104, le bloc de contrôle 60 vérifie si cette nouvelle étiquette correspond à une étiquette associée à une ou plusieurs fonctions de rappel.

Dans l'affirmative, lors d'une étape 132, chaque fonction de rappel associée à cette nouvelle étiquette est exécutée. Lors de l'exécution de cette fonction de rappel, l'étiquette présente dans l'instruction de branchement qui n'avait pas jusqu'à présent pu être chiffrée est remplacée par la valeur numérique de l'adresse de branchement qui est maintenant connue. Ensuite, la fonction de rappel renouvelle la valeur numérique du vecteur d'initialisation du module 18 en la remplaçant par la valeur de son paramètre IV_{c}. Puis, nₒ-1 mots sont transmis au module 18 pour que la séquence pseudo-aléatoire retrouve le même état que celui qui était le sien juste avant le chiffrement de l'instruction de branchement aval. Par exemple, le bloc de contrôle 60 réalise cela en appelant (nₒ-1) fois la fonction Encrypt(m), où m est un mot de 32 bits par exemple tiré aléatoirement ou pseudo-aléatoirement. Ensuite, le bloc de contrôle 60 appelle la fonction Encrypt(m) dans laquelle le mot m est cette fois-ci égal à l'instruction de branchement aval dans laquelle l'étiquette a été remplacée par l'adresse de branchement. En réponse, le module 18 retourne l'instruction de branchement aval chiffrée au bloc de contrôle 60. Le bloc de contrôle 60 enregistre alors dans l'espace de la mémoire 4 réservé à cet effet l'instruction de branchement aval chiffrée ainsi obtenue.

Si lors de l'étape 106 l'instruction traitée n'est pas une instruction de branchement ou si lors de l'étape 120 l'instruction traitée n'est pas une instruction de branchement aval, alors le procédé se poursuit par une étape 140 de chiffrement de l'instruction traitée. Plus précisément, l'instruction traitée est transmise au module 18 qui la chiffre à l'aide de la valeur courante IV_{c} du vecteur d'initialisation du module 18.

Ensuite, lors d'une étape 142, le bloc de contrôle 60 enregistre l'instruction ainsi chiffrée dans la mémoire 4 à la suite de la précédente instruction du flot d'instructions. Dans le cas où l'instruction traitée est une instruction de branchement, l'instruction de branchement chiffrée est donc enregistrée dans la mémoire 4 immédiatement après l'instruction Init(IVⱼ) ajoutée avant cette instruction de branchement.

La figure 6 représente, en langage C, le même flot d'instructions que celui représenté sur la figure 4 mais après que les instructions Init(IVⱼ) aient été ajoutées dans ce flot d'instructions en suivant le principe décrit dans le procédé de la figure 5. Sur cette figure, les différentes valeurs utilisées pour renouveler le vecteur d'initialisation du module 18 sont notées IV₂, IV₃ et IV₄.

L'exécution du flot d'instructions chiffré enregistré dans la mémoire 4 va maintenant être décrite en référence au procédé de la figure 7.

Lors d'une étape 150, juste avant le début de l'exécution du flot d'instructions chiffré, la valeur du vecteur d'initialisation du module 20 est initialisée avec la même valeur que celle qu'avait le module 18 au début du chiffrement de ce flot d'instructions. Par exemple, pour cela, le microprocesseur 2 exécute successivement une instruction Enable_Encrypt, une instruction Init(IV₀) puis une instruction de branchement vers l'adresse de branchement du premier bloc de base du flot d'instructions chiffré. L'instruction Enable_Encrypt ramène le microprocesseur 2 dans son mode chiffré s'il avait, entre-temps, basculé vers le mode non-chiffré.

Ensuite, lors d'une opération 152, le microprocesseur 2 charge depuis la mémoire 4, les unes après les autres et dans l'ordre où elles sont enregistrées, les instructions chiffrées du flot d'instructions.

Dans le mode chiffré, à chaque fois qu'une instruction est chargée, celle-ci est d'abord transmise au module 20 qui la déchiffre. Ensuite, l'instruction déchiffrée est transmise, sans passer par la mémoire 4, à l'unité arithmétique et logique 10 qui l'exécute.

Lorsque l'unité arithmétique et logique 10 exécute l'instruction Init(IVⱼ), cela charge immédiatement la valeur IVⱼ dans un registre de l'ensemble 12 ou dans la mémoire 22. Ensuite, à chaque fois que l'unité arithmétique et logique exécute un branchement vers une adresse de branchement, la valeur du vecteur d'initialisation du module 20 est remplacée par la valeur IVⱼ enregistrée dans le registre de l'ensemble 12 ou dans la mémoire 22 par la dernière instruction Init(IVⱼ) exécutée. Ainsi, immédiatement après un saut vers un autre bloc de base, toutes les instructions suivantes sont déchiffrées avec cette nouvelle valeur IVⱼ du vecteur d'initialisation du module 20 jusqu'à ce que le microprocesseur exécute la prochaine instruction de branchement.

La figure 8 représente un procédé alternatif de chiffrement par flot susceptible d'être mis en œuvre à la place du procédé de la figure 5. Ce procédé, contrairement à celui de la figure 5, fonctionne même si les blocs de base à chiffrer comportent des instructions de branchement indirect et/ou des appels à des fonctions. Ce procédé est identique à celui de la figure 5 sauf que l'étape 104 est remplacée par une étape 160 et les étapes 106, 108 et 110 sont omises.

L'étape 160 est identique à l'étape 104 sauf que le bloc de contrôle 60 insère au début du bloc de base l'instruction Init(IVⱼ) et enregistre cette instruction Init(IVⱼ) en clair dans la mémoire 4 à l'emplacement correspondant à l'adresse de branchement du bloc de base. Ainsi, chaque bloc de base débute par une instruction de renouvellement en clair et la suite des instructions de ce bloc de base sont chiffrées à l'aide de la valeur IVⱼ contenue dans cette instruction de renouvellement.

Lors de l'exécution du flot d'instructions chiffré à l'aide du procédé de la figure 8, le déchiffrement se déroule comme décrit en référence à la figure 7 sauf que, à chaque fois qu'une instruction est chargée, le microprocesseur 2 vérifie d'abord s'il s'agit d'une instruction de renouvellement. Dans l'affirmative, il ne procède pas au déchiffrement de cette instruction de renouvellement et la transmet immédiatement à l'unité arithmétique et logique 10 qui l'exécute immédiatement. Dans ce mode de réalisation, l'exécution de l'instruction Init(IVⱼ) remplace immédiatement la valeur courante IV_{c} du vecteur d'initialisation du module 20 par la nouvelle valeur IVⱼ. Ainsi, contrairement au mode de réalisation précédent, dans ce mode de réalisation, ce n'est pas l'exécution d'une instruction de branchement qui déclenche le renouvellement de la valeur du vecteur d'initialisation du module 20. De plus, dans ce mode de réalisation, chaque instruction de renouvellement est systématiquement située au début d'un bloc de base et non pas systématiquement située avant une instruction de branchement.

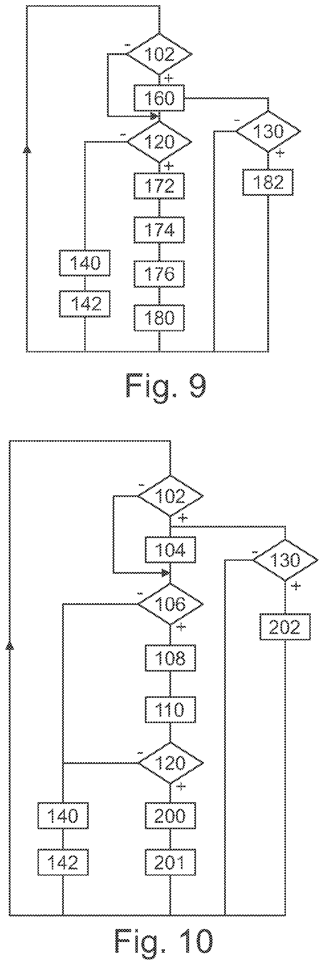

La figure 9 représente un procédé de chiffrement par flot susceptible d'être mis en œuvre à la place du procédé de la figure 8. Ce procédé est identique au procédé de la figure 8 sauf que :
- les étapes 122 et 124 sont remplacées par des étapes 172 à 180, et
- l'étape 132 est remplacée par une étape 182.

Lors de l'étape 172, le bloc de contrôle 60 insère dans le flot d'instructions un bloc de base aval immédiatement après le bloc de base courant et avant le bloc de base suivant. Ainsi, l'adresse de branchement de ce bloc de base aval est connue. De plus, le bloc de base aval a une taille connue à l'avance car il comporte systématiquement le même nombre d'instructions. Le bloc de base aval inséré débute par une instruction de renouvellement et se termine par une copie à l'identique de l'instruction de branchement aval traitée. L'instruction de renouvellement du bloc de base aval est générée, par exemple, de la même façon que lors de l'étape 160.

Lors d'une étape 174, l'instruction de branchement aval du bloc de base traitée, c'est-à-dire du bloc de base située juste avant le bloc de base aval inséré, est remplacée par une instruction de branchement inconditionnel vers l'adresse de branchement du bloc de base aval.

Lors d'une étape 176, cette instruction de branchement inconditionnel est transmise au module 18 qui la chiffre. Le bloc de contrôle 60 enregistre alors dans la mémoire 4 l'instruction de branchement inconditionnel juste après la dernière instruction chiffrée enregistrée dans la mémoire 4. Ainsi, l'instruction de branchement inconditionnel chiffré est enregistrée à la place qu'aurait dû occuper l'instruction de branchement aval.

Lors d'une étape 178, le bloc de contrôle 60 réserve ensuite dans la mémoire 4 un espace, à la suite de l'instruction de branchement inconditionnel chiffré, dont la taille est supérieure ou égale à la taille du bloc de base inséré.

Enfin, lors d'une étape 180, le bloc de contrôle 60 associe à l'étiquette de l'instruction de branchement aval traité une fonction de rappel Recall().

Ensuite, le procédé se poursuit par le traitement de la première instruction du bloc de base situé immédiatement après le bloc de base aval. Ainsi, à ce stade, le bloc de base aval n'est pas chiffré.

Lors de l'étape 182, le bloc de contrôle 60 :
- remplace l'étiquette contenue dans l'instruction de branchement aval par l'adresse de branchement qui est maintenant connue, puis
- chiffre le bloc de base aval.

Pour chiffrer le bloc de base aval, le microprocesseur 2 commence par exécuter l'instruction Init(IVⱼ) située au début de ce bloc de base aval. Ensuite, l'instruction de branchement aval, dans laquelle l'étiquette a été remplacée par la valeur numérique de l'adresse de branchement correspondante, est chiffrée à l'aide de la valeur IVⱼ du vecteur d'initialisation du module 18.

Enfin, le bloc de base aval contenant l'instruction Init(IVⱼ) en clair et l'instruction de branchement aval chiffrée est enregistré dans la mémoire 4 dans l'espace réservé à cet effet.

L'exécution et le déchiffrement du flot d'instructions chiffré obtenu avec le procédé de la figure 9 est identique à celui décrit dans le cas de la figure 8.

Dans le mode de réalisation de la figure 9, la fonction Recall() n'a pas besoin d'être paramétrée par une valeur IV_{c} du vecteur d'initialisation et par un nombre nₒ comme dans le mode de réalisation précédent.

La figure 10 représente un procédé de chiffrement par flot susceptible d'être utilisé à la place du procédé de la figure 5 ou 8. Ce procédé exploite le fait que l'opération de chiffrement par flot mise en œuvre est une fonction homomorphique par rapport à l'opération XOR. Autrement dit : Encrypt(m) XOR Encrypt(r) = Encrypt(m XOR r), où Encrypt (...) est la fonction de chiffrement exécutée par le module 18 avec un vecteur d'initialisation et une clé secrète donnée.

Par exemple, le procédé de chiffrement de la figure 10 est identique au procédé de la figure 5 sauf que :
- les étapes 122, 124 sont remplacées par, respectivement, des étapes 200 et 201, et
- l'étape 132 est remplacée par une étape 202.

Lors de l'étape 200, le bloc de contrôle 60 remplace l'instruction de branchement aval par un cryptogramme R obtenu en chiffrant un mot r connu. Par exemple, pour cela, le bloc de contrôle 60 transmet au module 18 le mot r et obtient en retour le mot R. On a donc R = Encrypt(r). Le mot R est de même taille que l'instruction de branchement aval chiffrée. Ensuite, le mot R est enregistré dans la mémoire 4 à la place de l'instruction de branchement aval à chiffrer.

L'étape 201 est identique à l'étape 124 sauf que la fonction de rappel associée à l'étiquette correspondant à l'adresse de branchement comporte un paramètre supplémentaire, à savoir la valeur du mot r utilisée pour générer le cryptogramme R.

Lors de l'étape 202, l'exécution de la fonction de rappel provoque :
a) le remplacement, dans l'instruction de branchement aval, de l'étiquette par la valeur numérique de l'adresse de branchement correspondante, l'instruction de branchement paramétrée par l'adresse de branchement forme alors un mot i,
b) la détermination d'un mot x tel que x XOR r = i,
c) l'initialisation du module 18 avec la valeur IV_{c} du paramètre de la fonction de rappel,
d) la transmission de nₒ-1 mots au module 18, puis
e) la transmission du mot x déterminé au module 18 qui retourne, en réponse, le cryptogramme X du mot x,
f) la combinaison des cryptogrammes X et R pour obtenir le cryptogramme I de l'instruction de branchement aval selon la relation suivante : I = X XOR R, et
g) l'enregistrement du cryptogramme I dans la mémoire 4 à la place du cryptogramme R.

Les opérations c) et d) ci-dessus ont déjà été décrites en détail en référence à l'étape 132.

Lors de l'opération f), la relation X XOR R peut aussi s'écrire de la façon suivante : Encrypt(x) XOR Encrypt(r) = Encrypt(x XOR r) = Encrypt (i). On comprend donc que cette relation permet d'obtenir le cryptogramme I sans jamais envoyer au module 18 l'instruction de branchement aval.

### Variante du code machine polymorphique :

D'autres procédés que celui décrit dans la demande US2015/0096569A1 sont possibles pour générer le code machine polymorphique. Par exemple, un autre procédé est décrit dans l'article de Giovanni Agosta et al., « A code morphing methodology to automate power analysis countermeasures », Proceedings of the 49th Annual ACM/IEEE Design Automation Conférence (DAC'12), pages 77-82, Juin 2012.

Les différentes variantes décrites à la fin de la demande US2015/0096569A1 peuvent aussi être adaptées et combinées aux modes de réalisation décrit ici.

Le module 52 et/ou l'ordonnanceur 56 peuvent être omis. Dans ce cas, l'allocation des registres et/ou l'ordre des instructions du flot d'instructions généré ne varie pas en fonction d'un aléa numérique.

Il n'est pas nécessaire de tirer aléatoirement ou pseudo-aléatoirement la valeur numérique qui est utilisée pour sélectionner la variante de codage 28. Par exemple, en variante, cette valeur numérique est fonction des conditions dans lesquelles s'exécute le code 40. Par exemple, cette valeur numérique dépend de la température du microprocesseur, du temps d'allumage de l'appareil 1 ou de tout autre paramètre susceptible de varier d'une exécution à la suivante du code 40. Cette valeur numérique peut aussi varier en fonction du contexte dans lequel s'exécute le code 40 comme par exemple en fonction de la quantité de mémoire disponible, de la fréquence du microprocesseur, du type de système d'exploitation ou autre.

En variante, le code 40 et, en particulier, le générateur 44 ne sont pas chiffrés.

Dans un autre mode de réalisation, seul le générateur 44 est chiffré. Par contre, le flot d'instructions généré par ce générateur 44, lorsqu'il est exécuté, n'est pas chiffré.

Il est aussi possible d'empiler les générateurs. Par exemple, un premier générateur génère le code d'un second générateur qui génère lui-même, lorsqu'il est exécuté par le microprocesseur 2, le code d'un troisième générateur qui, lorsqu'il est exécuté, génère le flot d'instructions qui réalise la fonction prédéterminée.

Dans une variante, l'algorithme utilisé pour chiffrer le code 40 est différent de celui utilisé pour chiffrer le flot d'instructions généré par le générateur 44. Par exemple, les instructions du générateur 44 sont chiffrées en mettant en œuvre un autre algorithme de chiffrement par flot que celui utilisé pour chiffrer le flot d'instructions généré par ce générateur 44. Dans une autre variante, les instructions du générateur 44 sont chiffrées en mettant en œuvre un algorithme de chiffrement par bloc et non pas un algorithme de chiffrement par flot.

### Variante du module de chiffrement et de déchiffrement :

En variante, la combinaison bit à bit du flot d'instructions généré avec la séquence pseudo-aléatoire est réalisée en mettant en œuvre une autre opération que l'opération XOR. Par exemple, l'opération utilisée est une opération d'addition entre deux octets modulo 256.

D'autres méthodes de chiffrement par flot peuvent être utilisées à la place de Trivium. Par exemple, l'algorithme AES (Advanced Encryption Standard) en mode CBC (Chiffre Bloc Chain) ou la méthode de Grain Mickey où l'algorithme RC4 peut être utilisé à la place de Trivium.

Les modules 18 et 20 peuvent aussi être remplacés par des modules logiciels.

### Variante dans la génération du flot d'instructions :

L'espace réservé dans la mémoire 4 pour y enregistrer plus tard l'instruction de branchement aval chiffrée peut aussi avoir une taille strictement supérieure à la taille de cette instruction de branchement chiffrée.

En variante, la clé secrète k peut être modifiée entre deux exécutions du code 40 ou au cours de la même exécution du code 40. Par exemple, plusieurs clés secrètes k₁ à kₙ sont enregistrées dans la mémoire 22. Chaque clé kᵢ est associée à un identifiant Ikᵢ. Ensuite, le microprocesseur est modifié, pour, en réponse à l'exécution d'une instruction Enable_Encrypt(Ikᵢ, IV), remplacer la clé secrète actuellement utilisée par les modules 18 et 20 par la nouvelle clé kᵢ et la valeur actuelle IV_{c} du vecteur d'initialisation par la valeur IV.

Dans un autre mode de réalisation, il est possible de désactiver par moment le chiffrement du flot d'instructions généré. Pour cela, le microprocesseur 2 est modifié pour, en réponse à l'exécution d'une instruction Disable_Encrypt, désactiver le chiffrement du flot d'instructions. Par exemple, pour cela, l'instruction Disable_Encrypt est ajoutée automatiquement dans le flot d'instructions juste avant la partie de ce flot d'instructions que l'on ne souhaite pas chiffrer. Ensuite, l'instruction Disable_Encrypt est traitée lors du chiffrement et du déchiffrement de façon similaire à ce qui a été décrite pour l'instruction Init(IVⱼ).

En combinant dans un même flot d'instructions des instructions Enable_Encrypt et Disable_Encrypt, il est possible de chiffrer uniquement certaines parties du flot d'instructions et de laisser en clair d'autres parties de ce flot d'instructions. Typiquement, les fonctions Init(IVⱼ) et Encrypt(m) ne sont alors accessibles que lorsque le chiffrement du flot d'instructions est activé.

En variante, les instructions de branchement inconditionnel vers un bloc de base suivant sont directement codées dans chacune de variantes 48, de sorte que le bloc de contrôle 60 n'a jamais besoin d'ajouter dans le flot d'instructions généré une telle instruction de branchement inconditionnel pour marquer la fin d'un bloc de base.

En variante, l'étape 110 de chiffrement de l'instruction Init(IVⱼ) est omise. Dans ce cas, cette instruction est enregistrée en clair dans la mémoire 4. Lors de l'exécution du flot d'instructions chiffré enregistré dans la mémoire 4, à chaque fois qu'une instruction est chargée, le bloc de contrôle 60 vérifie alors s'il s'agit d'une instruction Init(IVⱼ). Dans l'affirmative, cette instruction est directement envoyée à l'unité arithmétique et logique 10 pour y être exécutée sans, au préalable, être déchiffrée. Dans le cas contraire, l'instruction est déchiffrée avant d'être envoyée à l'unité arithmétique et logique 10.

Dans le procédé de la figure 8, la fonction de rappel peut être paramétrée avec la valeur à utiliser pour le vecteur d'initialisation lors du chiffrement du bloc de base aval. Dans ce cas, une instruction de renouvellement peut être placée juste avant l'instruction de branchement du bloc précédent, comme décrit dans le mode de réalisation de la figure 5.

### Avantages des modes de réalisations décrits :

Le chiffrement des instructions du générateur spécifique enregistré dans la mémoire principale rend plus difficile l'obtention d'informations sur le flot d'instructions généré par l'exécution de ce générateur spécifique. En effet, pour obtenir de telles informations, il n'est alors plus possible de les obtenir en désassemblant simplement les instructions de ce générateur spécifique dans la mémoire principale puisque celles-ci sont chiffrées. Cela renforce donc la sécurité.

L'ajout de l'instruction de renouvellement au début de chaque bloc de base permet de chiffrer et déchiffrer un flot d'instructions généré comportant des instructions de branchement indirect ou des appels à des fonctions.

Le fait que l'instruction de renouvellement, qui permet de déterminer la valeur du vecteur d'initialisation nécessaire pour déchiffrer le prochain bloc de base à exécuter, soit chiffrée dans le bloc de base précédent impose de déchiffrer les blocs de base dans l'ordre de leur exécution. Or, l'ordre dans lequel s'exécutent les différents blocs de base n'est connu qu'au cours de l'exécution de la fonction prédéterminée. Dès lors, le flot d'instructions ne peut être déchiffré qu'en même temps qu'il est exécuté, ce qui rend plus difficiles les tentatives d'attaque par désassemblage des instructions de ce flot d'instructions.

Le fait d'utiliser une simple combinaison bit à bit pour chiffrer et déchiffrer le flot d'instructions permet d'accélérer de façon substantielle l'exécution par le microprocesseur des opérations de chiffrement et de déchiffrement sans pour autant compromettre la sécurité de ce chiffrement car la valeur du vecteur d'initialisation est fréquemment renouvelée.

Le fait d'utiliser la fonction XOR pour la combinaison bit à bit renforce la sécurité du chiffrement et en simplifie l'implémentation.

L'utilisation d'une fonction de rappel paramétrée par une valeur du vecteur d'initialisation et par un numéro d'ordre permet de chiffrer par flot une instruction de branchement aval tout en traitant les autres instructions du flot d'instructions dans l'ordre où elles se présentent dans ce flot d'instructions.

L'ajout et l'utilisation d'un bloc de base aval dans le flot d'instructions pour chiffrer une instruction de branchement aval tout en conservant la possibilité de chiffrer les autres instructions dans l'ordre où celles-ci se présentent, permet de simplifier la fonction de rappel à utiliser car celle-ci n'a plus besoin d'être paramétrée, par exemple, par un vecteur d'initialisation et/ou un numéro d'ordre.

L'utilisation des propriétés homomorphiques de l'opération de chiffrement par flot pour construire le cryptogramme d'une instruction de branchement aval permet d'obtenir ce cryptogramme sans jamais envoyer l'instruction de branchement aval au module de chiffrement.

L'utilisation d'un tirage aléatoire ou pseudo-aléatoire d'une valeur numérique permet de faire varier de façon aléatoire ou pseudo-aléatoire, à chaque exécution, le code exécuté pour réaliser la fonction prédéterminée.

L'utilisation d'une clé secrète commune aux modules de chiffrement et de déchiffrement crée un appariement entre ces deux modules et empêche que le flot d'instructions généré, chiffré et enregistré dans la mémoire principale par le module de chiffrement puisse être exécuté par un autre microprocesseur équipé d'un autre module de déchiffrement paramétré avec une clé secrète différente.

Le fait d'utiliser des modules de chiffrement et de déchiffrement gravés en dur à l'intérieur du microprocesseur renforce la sécurité de l'exécution du code machine polymorphique.

## Revendications

1. Procédé d'exécution par un microprocesseur d'un code machine polymorphique d'une fonction prédéterminée, lors duquel le microprocesseur:
a) acquiert (86) une valeur numérique apte à varier, d'une exécution à une autre du même code machine polymorphique, puis
b) génère (86), en fonction de la valeur numérique acquise, un premier et, en alternance, un second flots d'instructions, ces premier et second flots d'instructions étant chacun aptes à réaliser la fonction prédéterminée lorsqu'ils sont exécutés par le microprocesseur, chacun de ces flots d'instructions étant formé d'une succession de blocs de base, chaque bloc de base débutant à une adresse de branchement et se terminant par une instruction de branchement vers une adresse de branchement d'un autre bloc de base, ces premier et second flots d'instructions se distinguant l'un de l'autre par au moins un opcode d'instructions ou un opérande différent ou une valeur littérale différente ou un nombre d'instructions différent,
c) enregistre (86) le flot d'instructions généré dans une mémoire principale, puis
d) exécute (88) le flot d'instructions généré qui vient d'être enregistré,
**caractérisé en ce que** :
- avant l'étape c) :
• pour chaque adresse de branchement à laquelle débute un bloc de base, le microprocesseur ajoute (108 ; 160) automatiquement dans le flot d'instructions généré une instruction de renouvellement apte, lorsqu'elle est exécutée par le microprocesseur, à déclencher, immédiatement après un branchement vers cette adresse de branchement, le renouvellement d'un vecteur d'initialisation d'un module de déchiffrement par flot avec une valeur spécifique associée à cette adresse de branchement, puis
• un module de chiffrement par flot, paramétré par un vecteur d'initialisation, chiffre (110, 140) le flot d'instructions au fur et à mesure qu'il est généré, au cours de ce chiffrement chaque bloc de base est chiffré à l'aide de la valeur spécifique du vecteur d'initialisation associée à l'adresse de branchement à laquelle il débute,
- lors de l'étape c), seul le flot d'instructions ainsi chiffré est enregistré dans la mémoire principale,
- lors de l'étape d), à chaque fois qu'une instruction chiffrée du flot d'instructions est chargée depuis la mémoire principale pour être exécutée, cette instruction est d'abord déchiffrée (152) par le module de déchiffrement, puis transférée, sans passer par la mémoire principale, vers une unité arithmétique et logique du microprocesseur, puis exécutée par cette unité arithmétique et logique, au cours de cette étape d), les instructions de renouvellement ajoutées sont exécutées au fur et à mesure qu'elles sont rencontrées dans le flot d'instructions.

2. Procédé selon la revendication 1, dans lequel, lors de l'étape b), c'est l'exécution, par le microprocesseur, d'un groupe d'instructions du code machine polymorphique, appelé générateur, qui génère le flot d'instructions, les instructions de ce générateur étant enregistrées (74, 84) dans la mémoire principale, uniquement sous forme chiffrée de sorte que l'étape b) comporte le chargement (86) d'une instruction chiffrée du générateur depuis la mémoire principale, puis son déchiffrement par le microprocesseur, suivi de son transfert, sans passer par la mémoire principale, vers une unité arithmétique et logique du microprocesseur et l'exécution de cette instruction par l'unité arithmétique et logique.

3. Procédé selon l'une quelconque des revendications précédentes, dans lequel le microprocesseur ajoute (160) l'instruction de renouvellement au début de chaque bloc de base de sorte que l'exécution de ce bloc de base débute par l'exécution de cette instruction de renouvellement.

4. Procédé selon l'une quelconque des revendications 1 à 2, dans lequel :
- l'instruction de renouvellement de la valeur du vecteur d'initialisation du prochain bloc de base à exécuter est ajoutée (108) dans le précédent bloc de base à exécuter immédiatement avant ce prochain bloc de base, et
- lors du chiffrement, l'instruction de renouvellement ajoutée dans le précédent bloc de base est chiffrée (110) en utilisant la même valeur du vecteur d'initialisation que celle utilisée pour chiffrer toutes les autres instructions du précédent bloc de base.

5. Procédé selon l'une quelconque des revendications précédentes, dans lequel :
- lors du chiffrement (110, 140), le flot d'instructions est seulement chiffré en le combinant bit à bit, à l'aide d'une fonction prédéterminée, avec une séquence pseudo-aléatoire générée par un générateur de séquence pseudo-aléatoire initialisé, au début de chaque bloc de base, par la valeur spécifique associée à l'adresse de branchement à laquelle débute ce bloc de base, et
- lors du déchiffrement (152), le flot d'instructions est déchiffré en le combinant bit à bit, à l'aide de l'inverse de ladite fonction prédéterminée, avec une séquence pseudo-aléatoire générée par un générateur de séquence pseudo-aléatoire identique initialisé, au début de chaque bloc de base, par la valeur spécifique associée à l'adresse de branchement à laquelle débute ce bloc de base.

6. Procédé selon la revendication 5, dans lequel :
- lors de l'étape b), l'un des blocs de base du flot d'instructions généré comporte une instruction de branchement aval, c'est-à-dire une instruction de branchement vers une adresse aval de branchement dont la valeur numérique n'est pas immédiatement déterminable par le microprocesseur car elle dépend d'un nombre d'instructions contenues dans une partie future du flot d'instructions qui n'a pas encore été générée à cet instant,
- lors du chiffrement du flot d'instructions au fur et à mesure qu'il est généré, lorsque cette instruction de branchement aval est rencontrée dans le bloc de base en cours de chiffrement, le microprocesseur :
• réserve (122) dans la mémoire principale, à l'emplacement où doit être enregistrée l'instruction de branchement aval chiffrée, un espace de même taille ou de taille supérieure à la taille de l'instruction de branchement aval chiffrée, et
• associe (124) une fonction de rappel à une étiquette correspondant à cette adresse aval de branchement, cette fonction de rappel étant paramétrée par la valeur spécifique du vecteur d'initialisation associée à l'adresse de branchement à laquelle débute ce bloc de base en cours de chiffrement et par un numéro d'ordre identifiant la position de cette instruction de branchement aval par rapport au début du bloc de base en cours de chiffrement, puis
• le chiffrement du flot d'instructions se poursuit sans avoir, à ce stade, chiffré et enregistré dans la mémoire principale, l'instruction de branchement aval,
- lorsque ladite partie future du flot d'instructions a été générée, le microprocesseur exécute la fonction de rappel associée à l'étiquette correspondant à cette adresse aval de branchement, l'exécution de cette fonction de rappel par le microprocesseur provoquant :
• le remplacement (132) de l'étiquette par la valeur numérique de l'adresse aval de branchement dans l'instruction de branchement aval,
• l'initialisation (132) du module de chiffrement avec la valeur du vecteur d'initialisation qui paramètre cette fonction de rappel,
• la génération (132) par le module de chiffrement ainsi initialisé d'une séquence pseudo-aléatoire jusqu'à générer la succession de bits de cette séquence pseudo-aléatoire correspondant au numéro d'ordre qui paramètre la fonction de rappel, puis
• la combinaison bit à bit (132) de cette succession générée de bits avec l'instruction de branchement aval dans laquelle l'étiquette a été remplacée par la valeur numérique de l'adresse aval de branchement, puis
• l'enregistrement (132) de l'instruction de branchement aval ainsi chiffrée dans l'espace réservé à cet effet dans la mémoire principale.

7. Procédé selon l'une quelconque des revendications 1 à 5, dans lequel :
- lors de l'étape b), l'un des blocs de base du flot d'instructions comporte une instruction de branchement aval, c'est-à-dire une instruction de branchement vers une adresse aval de branchement dont la valeur numérique n'est pas immédiatement déterminable par le microprocesseur car elle dépend d'un nombre d'instructions contenues dans une partie future du flot d'instructions qui n'a pas encore été générée à cet instant,
- lors du chiffrement du flot d'instructions au fur et à mesure qu'il est généré, lorsque cette instruction de branchement aval est rencontrée dans le bloc de base en cours de chiffrement, le microprocesseur :
• insert (172), dans le flot d'instructions, un bloc de base aval situé immédiatement après le bloc de base en cours de chiffrement, la taille de ce bloc de base aval étant connue et ce bloc de base aval se terminant par une copie de l'instruction de branchement aval,
• remplace (174) l'instruction de branchement aval, dans le bloc de base en cours de chiffrement, par une instruction de branchement inconditionnelle vers l'adresse de branchement à laquelle débute le bloc de base aval inséré,
• chiffre (176) l'instruction de branchement inconditionnelle puis l'enregistre dans la mémoire principale à l'emplacement où aurait due être enregistrée l'instruction de branchement aval chiffrée,
• réserve (178) dans la mémoire principale, à l'emplacement où doit être enregistré le bloc de base aval chiffré, un espace au moins de même taille que ce bloc de base aval,
• associe (180) une fonction de rappel à une étiquette correspondant à l'adresse aval de branchement, puis
• le chiffrement du flot d'instructions se poursuit sans avoir, à ce stade, chiffré et enregistré dans la mémoire principale, le bloc de base aval inséré,
- lorsque ladite partie future du flot d'instructions a été générée, le microprocesseur exécute la fonction de rappel associée à l'étiquette correspondant à cette adresse aval de branchement, l'exécution de cette fonction de rappel par le microprocesseur provoquant :
• le remplacement (182) de l'étiquette par la valeur numérique de l'adresse aval de branchement dans l'instruction de branchement aval du bloc de base aval inséré,
• le chiffrement (182) par le module de chiffrement du bloc de base aval inséré en utilisant pour cela la valeur spécifique du vecteur d'initialisation associée avec l'adresse de branchement à laquelle débute ce bloc de base aval inséré, puis
• l'enregistrement (182) du bloc de base aval ainsi chiffré dans l'espace réservé à cet effet dans la mémoire principale.

8. Procédé selon la revendication 5, dans lequel :
- l'opération de chiffrement, notée Encrypt(m), mise en œuvre par le module de chiffrement est homomorphique par rapport à une opération ⊙, c'est-à-dire que Encrypt(m) ⊙ Encrypt(r) = Encrypt (m ⊙ r),
- lors de l'étape b), l'un des blocs de base du flot d'instructions généré comporte une instruction de branchement aval, c'est-à-dire une instruction de branchement vers une adresse aval de branchement dont la valeur numérique n'est pas immédiatement déterminable par le microprocesseur car elle dépend d'un nombre d'instructions contenues dans une partie future du flot d'instructions qui n'a pas encore été générée à cet instant,
- lors du chiffrement du flot d'instructions au fur et à mesure qu'il est généré, lorsque cette instruction de branchement aval est rencontrée dans le bloc de base en cours de chiffrement, le microprocesseur :
• remplace (200) cette instruction de branchement aval par un cryptogramme R tel que R = Encrypt(r), où r est un mot connu de même longueur que l'instruction de branchement aval,
• enregistre (200) le cryptogramme R dans la mémoire principale à l'emplacement où doit être enregistrée l'instruction de branchement aval chiffrée,
• associe (201) une fonction de rappel à une étiquette correspondant à cette adresse aval de branchement, cette fonction de rappel étant paramétrée par la valeur spécifique du vecteur d'initialisation associée à l'adresse de branchement à laquelle débute ce bloc de base en cours de chiffrement, par un numéro d'ordre identifiant la position de cette instruction de branchement aval par rapport au début du bloc de base en cours de chiffrement, et par le mot r, puis
• le chiffrement du flot d'instructions se poursuit sans avoir, à ce stade, chiffré et enregistré dans la mémoire principale, l'instruction de branchement aval,
- lorsque ladite partie future du flot d'instructions a été générée, le microprocesseur exécute la fonction de rappel associée à l'étiquette correspondant à cette adresse aval de branchement, l'exécution de cette fonction de rappel par le microprocesseur provoquant :
• la détermination (202) d'un mot x tel que x ⊙ r = i, où i est l'instruction de branchement aval dans laquelle l'étiquette a été remplacée par la valeur numérique de l'adresse aval de branchement et r est le mot qui paramètre la fonction de rappel,
• l'initialisation (202) du module de chiffrement avec la valeur du vecteur d'initialisation qui paramètre cette fonction de rappel,
• la génération (202) par le module de chiffrement ainsi initialisé d'une séquence pseudo-aléatoire jusqu'à générer la succession de bits de cette séquence pseudo-aléatoire correspondant au numéro d'ordre qui paramètre la fonction de rappel, puis
• la combinaison bit à bit (202) de cette succession générée de bits avec le mot x déterminé pour obtenir un cryptogramme X, puis
• le calcul (202) de R ⊙ X pour obtenir un cryptogramme de l'instruction de branchement aval, puis
• l'enregistrement (202) du cryptogramme de l'instruction de branchement aval ainsi obtenu dans la mémoire principale à la place du mot R.

9. Procédé selon l'une quelconque des revendications précédentes, dans lequel l'étape a) comporte, à chaque exécution du code machine polymorphique, le tirage (86) aléatoire ou pseudo-aléatoire de ladite valeur numérique.

10. Procédé selon l'une quelconque des revendications précédentes, dans lequel lors des étapes b) et d), le module de chiffrement et le module de déchiffrement sont chacun paramétrés par une clef secrète de sorte que le flot d'instructions chiffré varie aussi en fonction de la valeur de cette clef secrète, la valeur de cette clef secrète restant inchangée pendant toute l'exécution du code machine polymorphique.

11. Procédé selon l'une quelconque des revendications précédentes, dans lequel la fonction prédéterminée est une primitive cryptographique apte à chiffrer ou déchiffrer des données.

12. Code machine polymorphique (40) d'une fonction prédéterminée, ce code machine polymorphique comportant des instructions exécutables par un microprocesseur (2) qui, lorsqu'elles sont exécutées par ce microprocesseur, provoque :
a) l'acquisition d'une valeur numérique apte à varier, d'une exécution à une autre du même code machine polymorphique, puis
b) la génération, en fonction de la valeur numérique acquise, d'un premier et, en alternance, d'un second flots d'instructions, ces premier et second flots d'instructions étant chacun apte à réaliser la fonction prédéterminée lorsqu'ils sont exécutés par le microprocesseur, chacun de ces flots d'instructions étant formé d'une succession de blocs de base, chaque bloc de base débutant à une adresse de branchement et se terminant par une instruction de branchement vers une adresse de branchement d'un autre bloc de base, ces premier et second flots d'instructions se distinguant l'un de l'autre par au moins un opcode d'instructions ou un opérande différent ou une valeur littérale différente ou un nombre d'instructions différent,
c) l'enregistrement du flot d'instructions généré dans une mémoire principale, puis
d) l'exécution du flot d'instructions généré qui vient d'être enregistré,
**caractérisé en ce que** :
- avant l'étape c) :
• pour chaque adresse de branchement à laquelle débute un bloc de base, le microprocesseur ajoute automatiquement dans le flot d'instructions généré une instruction de renouvellement apte, lorsqu'elle est exécutée par le microprocesseur, à déclencher, immédiatement après le branchement vers cette adresse de branchement, le renouvellement d'un vecteur d'initialisation d'un module de déchiffrement par flot avec une valeur spécifique associée à cette adresse de branchement, puis
• un module de chiffrement par flot, paramétré par un vecteur d'initialisation, chiffre le flot d'instructions au fur et à mesure qu'il est généré, au cours de ce chiffrement chaque bloc de base est chiffré à l'aide de la valeur spécifique du vecteur d'initialisation associée à l'adresse de branchement à laquelle il débute,
- lors de l'étape c), seul le flot d'instructions ainsi chiffré est enregistré dans la mémoire principale,
- lors de l'étape d), à chaque fois qu'une instruction chiffrée du flot d'instructions est chargée depuis la mémoire principale pour être exécutée, cette instruction est d'abord déchiffrée par le module de déchiffrement, puis transférée, sans passer par la mémoire principale, vers une unité arithmétique et logique du microprocesseur, puis exécutée par cette unité arithmétique et logique, au cours de cette étape d), les instructions de renouvellement ajoutées sont exécutées au fur et à mesure qu'elles sont rencontrées dans le flot d'instructions.

13. Support (6) d'enregistrement d'informations, **caractérisé en ce qu'**il comporte un code machine polymorphique exécutable conforme à la revendication 12.

14. Appareil électronique (1) apte à exécuter un code machine polymorphique d'une fonction prédéterminée, cet appareil comportant un microprocesseur (2) programmé pour réaliser les étapes suivantes :
a) l'acquisition d'une valeur numérique apte à varier, d'une exécution à une autre du même code machine polymorphique, puis
b) la génération, en fonction de la valeur numérique acquise, d'un premier et, en alternance, d'un second flots d'instructions, ces premier et second flots d'instructions étant chacun apte à réaliser la fonction prédéterminée lorsqu'ils sont exécutés par le microprocesseur, chacun de ces flots d'instructions étant formé d'une succession de blocs de base, chaque bloc de base débutant à une adresse de branchement et se terminant par une instruction de branchement vers une adresse de branchement d'un autre bloc de base, ces premier et second flots d'instructions se distinguant l'un de l'autre par au moins un opcode d'instructions ou un opérande différent ou une valeur littérale différente ou un nombre d'instructions différent,
c) l'enregistrement du flot d'instructions généré dans une mémoire principale, puis
d) l'exécution du flot d'instructions généré qui vient d'être enregistré,
**caractérisé en ce que** le microprocesseur (2) est également programmé pour réaliser les étapes suivantes :
- avant l'étape c) :
• pour chaque adresse de branchement à laquelle débute un bloc de base, le microprocesseur ajoute automatiquement dans le flot d'instructions généré une instruction de renouvellement apte, lorsqu'elle est exécutée par le microprocesseur, à déclencher, immédiatement après le branchement vers cette adresse de branchement, le renouvellement d'un vecteur d'initialisation d'un module (20) de déchiffrement par flot avec une valeur spécifique associée à cette adresse de branchement, puis
• un module (18) de chiffrement par flot, paramétré par un vecteur d'initialisation, chiffre le flot d'instructions au fur et à mesure qu'il est généré, au cours de ce chiffrement chaque bloc de base est chiffré à l'aide de la valeur spécifique du vecteur d'initialisation associée à l'adresse de branchement à laquelle il débute,
- lors de l'étape c), seul le flot d'instructions ainsi chiffré est enregistré dans la mémoire principale,
- lors de l'étape d), à chaque fois qu'une instruction chiffrée du flot d'instructions est chargée depuis la mémoire principale pour être exécutée, cette instruction est d'abord déchiffrée par le module (20) de déchiffrement, puis transférée, sans passer par la mémoire principale, vers une unité arithmétique et logique (10) du microprocesseur (2), puis exécutée par cette unité arithmétique et logique, au cours de cette étape d), les instructions de renouvellement ajoutées sont exécutées au fur et à mesure qu'elles sont rencontrées dans le flot d'instructions.

15. Appareil selon la revendication 14, dans lequel les modules (18, 20) de chiffrement et de déchiffrement sont uniquement implémentés dans des circuits physiques réalisés sur le même substrat que celui où sont réalisés les circuits physiques de l'unité arithmétique et logique (10) du microprocesseur (2).

## Patentansprüche

1. Verfahren zur Ausführung eines polymorphen Maschinencodes einer vorbestimmten Funktion durch einen Mikroprozessor, bei dem der Mikroprozessor:
a) einen numerischen Wert erfasst (86), der von einer Ausführung des gleichen polymorphen Maschinencodes zu einer anderen variieren kann, dann
b) abhängig vom erfassten numerischen Wert einen ersten und abwechselnd einen zweiten Befehlsstrom generiert (86), wobei diese ersten und zweiten Befehlsströme je die vorbestimmte Funktion durchführen können, wenn sie vom Mikroprozessor ausgeführt werden, wobei jeder dieser Befehlsströme von einer Aufeinanderfolge von Basisblöcken geformt wird, wobei jeder Basisblock an einer Verzweigungsadresse beginnt und durch einen Verzweigungsbefehl zu einer Verzweigungsadresse eines anderen Basisblocks endet, wobei diese ersten und zweiten Befehlsströme sich voneinander durch mindestens einen Befehlsopcode oder einen anderen Operanden oder einen anderen Literalwert oder eine andere Anzahl von Befehlen unterscheiden,
c) den generierten Befehlsstrom in einem Hauptspeicher speichert (86), dann
d) den soeben gespeicherten generierten Befehlsstrom ausführt (88),
**dadurch gekennzeichnet, dass**:
- vor dem Schritt c):
• für jede Verzweigungsadresse, an der ein Basisblock beginnt, der Mikroprozessor automatisch zum generierten Befehlsstrom einen Erneuerungsbefehl hinzufügt (108; 160), der, wenn er vom Mikroprozessor ausgeführt wird, direkt nach einer Verzweigung zu dieser Verzweigungsadresse die Erneuerung eines Initialisierungsvektors eines Stromentschlüsselungsmoduls mit einem dieser Verzweigungsadresse zugeordneten spezifischen Wert auslösen kann, dann
• ein von einem Initialisierungsvektor parametriertes Stromverschlüsselungsmodul den Befehlsstrom im Laufe seiner Generierung verschlüsselt (110, 140), während dieser Verschlüsselung jeder Basisblock mit Hilfe des spezifischen Werts des der Verzweigungsadresse, an der er beginnt, zugeordneten Initialisierungsvektors verschlüsselt wird,
- im Schritt c) nur der so verschlüsselte Befehlsstrom im Hauptspeicher gespeichert wird,
- im Schritt d) jedes Mal, wenn ein verschlüsselter Befehl des Befehlsstroms vom Hauptspeicher geladen wird, um ausgeführt zu werden, dieser Befehl zunächst vom Entschlüsselungsmodul entschlüsselt (152), dann, ohne über den Hauptspeicher zu gehen, zu einer arithmetischen und logischen Einheit des Mikroprozessors übertragen, dann von dieser arithmetischen und logischen Einheit ausgeführt wird, während dieses Schritts d) die hinzugefügten Erneuerungsbefehle laufend ausgeführt werden, wie sie im Befehlsstrom angetroffen werden.

2. Verfahren nach Anspruch 1, wobei es im Schritt b) die Ausführung einer Gruppe von Befehlen des polymorphen Maschinencodes, Generator genannt, durch den Mikroprozessor ist, die den Befehlsstrom generiert, wobei die Befehle dieses Generators im Hauptspeicher nur in verschlüsselter Form gespeichert werden (74, 84), so dass der Schritt b) das Laden (86) eines verschlüsselten Befehls des Generators vom Hauptspeicher, dann seine Entschlüsselung durch den Mikroprozessor, gefolgt von seiner Übertragung, ohne über den Hauptspeicher zu gehen, zu einer arithmetischen und logischen Einheit des Mikroprozessors und die Ausführung dieses Befehls durch die arithmetische und logische Einheit aufweist.

3. Verfahren nach einem der vorhergehenden Ansprüche, wobei der Mikroprozessor den Erneuerungsbefehl zu Beginn jedes Basisblocks hinzufügt (160), so dass die Ausführung dieses Basisblocks durch die Ausführung dieses Erneuerungsbefehls beginnt.

4. Verfahren nach einem der Ansprüche 1 bis 2, wobei:
- der Erneuerungsbefehl des Werts des Initialisierungsvektors des nächsten auszuführenden Basisblocks zum vorhergehenden Basisblock hinzugefügt (108) wird, der direkt vor diesem nächsten Basisblock auszuführen ist, und
- bei der Verschlüsselung der zum vorhergehenden Basisblock hinzugefügte Erneuerungsbefehl unter Verwendung des gleichen Werts des Initialisierungsvektors wie derjenige verschlüsselt wird (110), der verwendet wird, um alle anderen Befehle des vorhergehenden Basisblocks zu verschlüsseln.

5. Verfahren nach einem der vorhergehenden Ansprüche, wobei:
- bei der Verschlüsselung (110, 140) der Befehlsstrom nur verschlüsselt wird, indem er Bit für Bit mit Hilfe einer vorbestimmten Funktion mit einer Pseudozufallsfolge kombiniert wird, die von einem Pseudozufallsfolgengenerator generiert wird, der zu Beginn jedes Basisblocks durch den spezifischen Wert initialisiert wird, der der Verzweigungsadresse zugeordnet ist, an der dieser Basisblock beginnt, und
- bei der Entschlüsselung (152) der Befehlsstrom entschlüsselt wird, indem er Bit für Bit mit Hilfe des Umkehrwerts der vorbestimmten Funktion mit einer Pseudozufallsfolge kombiniert wird, die von einem gleichen Pseudozufallsfolgengenerator generiert wird, der zu Beginn jedes Basisblocks durch den spezifischen Wert initialisiert wird, der der Verzweigungsadresse zugeordnet ist, an der dieser Basisblock beginnt.

6. Verfahren nach Anspruch 5, wobei:
- im Schritt b) einer der Basisblöcke des generierten Befehlsstroms einen stromabwärtigen Verzweigungsbefehl aufweist, d.h. einen Verzweigungsbefehl zu einer stromabwärtigen Verzweigungsadresse, deren numerischer Wert nicht direkt vom Mikroprozessor bestimmt werden kann, da er von einer Anzahl von Befehlen abhängt, die in einem zukünftigen Teil des Befehlsstroms enthalten sind, der zu diesem Zeitpunkt noch nicht generiert worden ist,
- bei der Verschlüsselung des Befehlsstroms im Laufe seiner Generierung, wenn dieser stromabwärtige Verzweigungsbefehl im Basisblock, der gerade verschlüsselt wird, angetroffen wird, der Mikroprozessor:
• im Hauptspeicher an der Stelle, an der der verschlüsselte stromabwärtige Verzweigungsbefehl gespeichert werden soll, einen Platz gleicher Größe oder größerer Größe als die Größe des verschlüsselten stromabwärtigen Verzweigungsbefehls reserviert (122), und
• einem Label entsprechend dieser stromabwärtigen Verzweigungsadresse eine Rückstellfunktion zuordnet (124), wobei diese Rückstellfunktion vom spezifischen Wert des Initialisierungsvektors, der der Verzweigungsadresse zugeordnet ist, an der dieser Basisblock, der gerade verschlüsselt wird, beginnt, und von einer Ordnungsnummer parametriert wird, die die Position dieses stromabwärtigen Verzweigungsbefehls bezüglich des Beginns des Basisblocks, der gerade verschlüsselt wird, identifiziert, dann
• die Verschlüsselung des Befehlsstroms fortgesetzt wird, ohne dass in diesem Stadium der stromabwärtige Verzweigungsbefehl verschlüsselt und im Hauptspeicher gespeichert wurde,
- wenn der zukünftige Teil des Befehlsstroms generiert worden ist, der Mikroprozessor die dem dieser stromabwärtigen Verzweigungsadresse entsprechenden Label zugeordnete Rückstellfunktion ausführt, wobei die Ausführung dieser Rückstellfunktion durch den Mikroprozessor bewirkt:
• den Ersatz (132) des Labels durch den numerischen Wert der stromabwärtigen Verzweigungsadresse im stromabwärtigen Verzweigungsbefehl,
• die Initialisierung (132) des Verschlüsselungsmoduls mit dem Wert des Initialisierungsvektors, der diese Rückstellfunktion parametriert,
• die Generierung (132) durch das so initialisierte Verschlüsselungsmodul einer Pseudozufallsfolge bis zur Generierung der Aufeinanderfolge von Bits dieser Pseudozufallsfolge, die der Ordnungsnummer entspricht, die die Rückstellfunktion parametriert hat, dann
• die Kombination Bit für Bit (132) dieser generierten Aufeinanderfolge von Bits mit dem stromabwärtigen Verzweigungsbefehl, in dem das Label durch den numerischen Wert der stromabwärtigen Verzweigungsadresse ersetzt wurde, dann
• die Speicherung (132) des so verschlüsselten stromabwärtigen Verzweigungsbefehls an dem zu diesem Zweck reservierten Platz im Hauptspeicher.

7. Verfahren nach einem der Ansprüche 1 bis 5, wobei:
- im Schritt b) einer der Basisblöcke des Befehlsstroms einen stromabwärtigen Verzweigungsbefehl aufweist, d.h. einen Verzweigungsbefehl zu einer stromabwärtigen Verzweigungsadresse, deren numerischer Wert nicht direkt vom Mikroprozessor bestimmt werden kann, da er von einer Anzahl von Befehlen abhängt, die in einem zukünftigen Teil des Befehlsstroms enthalten sind, der zu diesem Zeitpunkt noch nicht generiert worden ist,
- bei der Verschlüsselung des Befehlsstroms im Laufe seiner Generierung, wenn dieser stromabwärtige Verzweigungsbefehl in dem Basisblock angetroffen wird, der gerade verschlüsselt wird, der Mikroprozessor:
• in den Befehlsstrom einen stromabwärtigen Basisblock einfügt (172), der sich direkt nach dem Basisblock befindet, der gerade verschlüsselt wird, wobei die Größe dieses stromabwärtigen Basisblocks bekannt ist, und dieser stromabwärtige Basisblock mit einer Kopie des stromabwärtigen Verzweigungsbefehls endet,
• den stromabwärtigen Verzweigungsbefehl in dem Basisblock, der gerade verschlüsselt wird, durch einen bedingungslosen Verzweigungsbefehl zu der Verzweigungsadresse ersetzt (174), an der der eingefügte stromabwärtige Basisblock beginnt,
• den bedingungslosen Verzweigungsbefehl verschlüsselt (176) und ihn dann im Hauptspeicher an der Stelle speichert, an der der verschlüsselte stromabwärtige Verzweigungsbefehl hätte gespeichert werden sollen,
• im Hauptspeicher an der Stelle, an der der verschlüsselte stromabwärtige Basisblock gespeichert werden soll, einen Platz von mindestens der gleichen Größe wie dieser stromabwärtige Basisblock reserviert (178),
• einem Label entsprechend der stromabwärtigen Verzweigungsadresse eine Rückstellfunktion zuordnet (180), dann
• die Verschlüsselung des Befehlsstroms fortgesetzt wird, ohne dass in diesem Stadium der eingefügte stromabwärtige Basisblock verschlüsselt und im Hauptspeicher gespeichert wurde,
- wenn der zukünftige Teil des Befehlsstroms generiert worden ist, der Mikroprozessor die dem Label entsprechend dieser stromabwärtigen Verzweigungsadresse zugeordnete Rückstellfunktion ausführt, wobei die Ausführung dieser Rückstellfunktion durch den Mikroprozessor bewirkt:
• den Ersatz (182) des Labels durch den numerischen Wert der stromabwärtigen Verzweigungsadresse im stromabwärtigen Verzweigungsbefehl des eingefügten stromabwärtigen Basisblocks,
• die Verschlüsselung (182) durch das Verschlüsselungsmodul des eingefügten stromabwärtigen Basisblocks, indem hierfür der spezifische Wert des Initialisierungsvektors verwendet wird, der der Verzweigungsadresse zugeordnet ist, an der dieser eingefügte stromabwärtige Basisblock beginnt, dann
• die Speicherung (182) des so verschlüsselten stromabwärtigen Basisblocks an dem Platz, der zu diesem Zweck im Hauptspeicher reserviert ist.

8. Verfahren nach Anspruch 5, wobei
- die Verschlüsselungsoperation, mit Encrypt(m) bezeichnet, die vom Verschlüsselungsmodul durchgeführt wird, bezüglich einer Operation ⊙ homomorph ist, d.h., dass Encrypt(m) ⊙ Encrypt(r) = Encrypt (m ⊙ r),
- im Schritt b) einer der Basisblöcke des generierten Befehlsstroms einen stromabwärtigen Verzweigungsbefehl aufweist, d.h. einen Verzweigungsbefehl zu einer stromabwärtigen Verzweigungsadresse, deren numerischer Wert nicht direkt vom Mikroprozessor bestimmt werden kann, da er von einer Anzahl von Befehlen abhängt, die in einem zukünftigen Teil des Befehlsstroms enthalten sind, der zu diesem Zeitpunkt noch nicht generiert worden ist,
- bei der Verschlüsselung des Befehlsstroms im Laufe seiner Generierung, wenn dieser stromabwärtige Verzweigungsbefehl im Basisblock angetroffen wird, der gerade verschlüsselt wird, der Mikroprozessor:
• diesen stromabwärtigen Verzweigungsbefehl durch ein Kryptogramm R derart, dass R = Encrypt(r), ersetzt (200), wobei r ein bekanntes Wort gleicher Länge wie der stromabwärtige Verzweigungsbefehl ist,
• das Kryptogramm R im Hauptspeicher an der Stelle speichert (200), an der der verschlüsselte stromabwärtige Verzweigungsbefehl gespeichert werden soll,
• eine Rückstellfunktion einem Label zuordnet (201), das dieser stromabwärtigen Verzweigungsadresse entspricht, wobei diese Rückstellfunktion durch den spezifischen Wert des Initialisierungsvektors, der der Verzweigungsadresse zugeordnet ist, an der dieser Basisblock beginnt, der gerade verschlüsselt wird, durch eine Ordnungsnummer, die die Position dieses stromabwärtigen Verzweigungsbefehls bezüglich des Beginns des Basisblocks, der gerade verschlüsselt wird, identifiziert, und durch das Wort r parametriert wird, dann
• die Verschlüsselung des Befehlsstroms fortgesetzt wird, ohne dass in diesem Stadium der stromabwärtige Verzweigungsbefehl verschlüsselt und im Hauptspeicher gespeichert wurde,
- wenn der zukünftige Teil des Befehlsstroms generiert worden ist, der Mikroprozessor die Rückstellfunktion ausführt, die dem dieser stromabwärtigen Verzweigungsadresse entsprechenden Label zugeordnet ist, wobei die Ausführung dieser Rückstellfunktion durch den Mikroprozessor bewirkt:
• die Bestimmung (202) eines Worts x derart, dass x ⊙ r = i, wobei i der stromabwärtige Verzweigungsbefehl ist, in dem das Label durch den numerischen Wert der stromabwärtigen Verzweigungsadresse ersetzt worden ist, und r das Wort ist, das die Rückstellfunktion parametriert,
• die Initialisierung (202) des Verschlüsselungsmoduls mit dem Wert des Initialisierungsvektors, der diese Rückstellfunktion parametriert,
• die Generierung (202) durch das so initialisierte Verschlüsselungsmodul einer Pseudozufallsfolge, bis zur Generierung der Aufeinanderfolge von Bits dieser Pseudozufallsfolge entsprechend der Ordnungsnummer, die die Rückstellfunktion parametriert, dann
• die Kombination Bit für Bit (202) dieser generierten Aufeinanderfolge von Bits mit dem Wort x, das bestimmt wird, um ein Kryptogramm X zu erhalten, dann
• die Berechnung (202) von R ⊙ X, um ein Kryptogramm des stromabwärtigen Verzweigungsbefehls zu erhalten, dann
• die Speicherung (202) des so erhaltenen Kryptogramms des stromabwärtigen Verzweigungsbefehls im Hauptspeicher anstelle des Worts R.

9. Verfahren nach einem der vorhergehenden Ansprüche, wobei der Schritt a) bei jeder Ausführung des polymorphen Maschinencodes die Zufalls- oder Pseudozufallsziehung (86) des numerischen Werts aufweist.

10. Verfahren nach einem der vorhergehenden Ansprüche, wobei in den Schritten b) und d) das Verschlüsselungsmodul und das Entschlüsselungsmodul je durch einen geheimen Schlüssel parametriert werden, so dass der verschlüsselte Befehlsstrom ebenfalls abhängig vom Wert dieses geheimen Schlüssels variiert, wobei der Wert dieses geheimen Schlüssels während der ganzen Ausführung des polymorphen Maschinencode unverändert bleibt.

11. Verfahren nach einem der vorhergehenden Ansprüche, wobei die vorbestimmte Funktion ein kryptographisches Primitiv ist, das Daten verschlüsseln oder entschlüsseln kann.

12. Polymorpher Maschinencode (40) einer vorbestimmten Funktion, wobei dieser polymorphe Maschinencode von einem Mikroprozessor (2) ausführbare Befehle aufweist, die, wenn sie von diesem Mikroprozessor ausgeführt werden, bewirkt:
a) die Erfassung eines numerischen Werts, der von einer Ausführung zur anderen dieses gleichen polymorphen Maschinencodes variieren kann, dann
b) die Generierung, abhängig vom erfassten numerischen Wert, eines ersten und abwechselnd eines zweiten Befehlsstroms, wobei diese ersten und zweiten Befehlsströme je die vorbestimmte Funktion durchführen können, wenn sie vom Mikroprozessor ausgeführt werden, wobei jeder dieser Befehlsströme von einer Aufeinanderfolge von Basisblöcken geformt wird, wobei jeder Basisblock an einer Verzweigungsadresse beginnt und durch einen Verzweigungsbefehl zu einer Verzweigungsadresse eines anderen Basisblocks endet, wobei diese ersten und zweiten Befehlsströme sich voneinander durch mindestens einen Befehlsopcode oder einen anderen Operanden oder einen anderen Literalwert oder eine andere Anzahl von Befehlen unterscheiden,
c) die Speicherung des generierten Befehlsstroms in einem Hauptspeicher, dann
d) die Ausführung des generierten Befehlsstroms, der soeben gespeichert wurde,
**dadurch gekennzeichnet, dass**:
- vor dem Schritt c):
• für jede Verzweigungsadresse, an der ein Basisblock beginnt, der Mikroprozessor zum generierten Befehlsstrom automatisch einen Erneuerungsbefehl hinzufügt, der, wenn er vom Mikroprozessor ausgeführt wird, direkt nach der Verzweigung zu dieser Verzweigungsadresse die Erneuerung eines Initialisierungsvektors eines Stromentschlüsselungsmoduls mit einem spezifischen Wert auslösen kann, der dieser Verzweigungsadresse zugeordnet ist, dann
• ein Stromverschlüsselungsmodul, parametriert durch einen Initialisierungsvektor, den Befehlsstrom im Laufe seiner Generierung verschlüsselt, während dieser Verschlüsselung jeder Basisblock mit Hilfe des spezifischen Werts des Initialisierungsvektors verschlüsselt wird, der der Verzweigungsadresse zugeordnet ist, an der er beginnt,
- im Schritt c) nur der so verschlüsselte Befehlsstrom im Hauptspeicher gespeichert wird,
- im Schritt d) jedes Mal, wenn ein verschlüsselter Befehl des Befehlsstroms vom Hauptspeicher ausgehend geladen wird, um ausgeführt zu werden, dieser Befehl zunächst vom Entschlüsselungsmodul entschlüsselt, dann, ohne über den Hauptspeicher zu gehen, zu einer arithmetischen und logischen Einheit des Mikroprozessors übertragen wird, dann von dieser arithmetischen und logischen Einheit während dieses Schritts d) ausgeführt wird, die hinzugefügten Erneuerungsbefehle laufend ausgeführt werden, wie sie im Befehlsstrom angetroffen werden.

13. Informationsspeicherträger (6), **dadurch gekennzeichnet, dass** er einen polymorphen Maschinencode aufweist, der gemäß Anspruch 12 ausgeführt werden kann.

14. Elektronisches Gerät (1), das einen polymorphen Maschinencode einer vorbestimmten Funktion ausführen kann, wobei dieses Gerät einen Mikroprozessor (2) aufweist, der programmiert ist, die folgenden Schritte durchzuführen:
a) die Erfassung eines numerischen Werts, der von einer Ausführung zur anderen des gleichen polymorphen Maschinencode variieren kann, dann
b) die Generierung, abhängig vom erfassten numerischen Wert, eines ersten und abwechselnd eines zweiten Befehlsstroms, wobei diese ersten und zweiten Befehlsströme je die vorbestimmte Funktion durchführen können, wenn sie vom Mikroprozessor ausgeführt werden, wobei jeder dieser Befehlsströme von einer Aufeinanderfolge von Basisblöcken geformt wird, wobei jeder Basisblock an einer Verzweigungsadresse beginnt und durch einen Verzweigungsbefehl zu einer Verzweigungsadresse eines anderen Basisblocks endet, wobei diese ersten und zweiten Befehlsströme sich voneinander durch mindestens einen Befehlsopcode oder einen anderen Operanden oder einen anderen Literalwert oder eine andere Anzahl von Befehlen unterscheiden,
c) die Speicherung des generierten Befehlsstroms in einem Hauptspeicher, dann
d) die Ausführung des generierten Befehlsstroms, der gerade gespeichert wurde,
**dadurch gekennzeichnet, dass** der Mikroprozessor (2) ebenfalls programmiert ist, um die folgenden Schritte durchzuführen:
- vor dem Schritt c):
» für jede Verzweigungsadresse, an der ein Basisblock beginnt, der Mikroprozessor automatisch dem generierten Befehlsstrom einen Erneuerungsbefehl hinzufügt, der, wenn er vom Mikroprozessor ausgeführt wird, direkt nach der Verzweigung zu dieser Verzweigungsadresse die Erneuerung eines Initialisierungsvektors eines Stromentschlüsselungsmoduls (20) mit einem spezifischen Wert auslösen kann, der dieser Verzweigungsadresse zugeordnet ist, dann
» ein Stromverschlüsselungsmodul (18), parametriert durch einen Initialisierungsvektor, den Befehlsstrom im Laufe seiner Generierung verschlüsselt, während dieser Verschlüsselung jeder Basisblock mit Hilfe des spezifischen Werts des Initialisierungsvektors verschlüsselt wird, der der Verzweigungsadresse zugeordnet ist, an der er beginnt,
- im Schritt c) nur der so verschlüsselte Befehlsstrom im Hauptspeicher gespeichert wird,
- im Schritt d) jedes Mal, wenn ein verschlüsselter Befehl des Befehlsstroms ausgehend vom Hauptspeicher geladen wird, um ausgeführt zu werden, dieser Befehl zunächst vom Entschlüsselungsmodul (20) entschlüsselt und dann, ohne über den Hauptspeicher zu gehen, zu einer arithmetischen und logischen Einheit (10) des Mikroprozessors (2) übertragen wird, dann von dieser arithmetischen und logischen Einheit während dieses Schritts d) ausgeführt wird, die hinzugefügten Erneuerungsbefehlen laufend ausgeführt werden, wie sie im Befehlsstrom angetroffen werden.

15. Gerät nach Anspruch 14, wobei die Verschlüsselungs- und Entschlüsselungsmodule (18, 20) nur in physischen Schaltungen implementiert werden, die auf dem gleichen Substrat hergestellt sind wie dasjenige, auf dem die physischen Schaltungen der arithmetischen und logischen Einheit (10) des Mikroprozessors (2) hergestellt sind.

## Claims

1. Method for executing a polymorphic machine code of a predetermined function by a microprocessor, wherein the microprocessor:
a) acquires (86) a numerical value capable of varying, from one execution to another of the same polymorphic machine code, then
b) generates (86), according to the numerical value acquired, a first and, alternately, a second instruction stream, these first and second instruction streams each being capable of performing the predetermined function when they are executed by the microprocessor, each of these instruction streams being formed of a succession of basic blocks, each basic block starting at a branch address and ending with a branch instruction to a branch address of another basic block, these first and second instruction streams being distinguished from each other by at least one instruction opcode or a different operand or a different literal value or a different number of instructions,
c) records (86) the generated instruction stream in a main memory, then
d) executes (88) the generated instruction stream that has just been recorded,
**characterized in that**:
- before step c):
• for each branch address at which a basic block starts, the microprocessor automatically adds (108; 160) into the generated instruction stream a renewal instruction capable, when executed by the microprocessor, of triggering, immediately after a branching to this branch address, the renewal of an initialization vector of a stream decryption module with a specific value associated with this branch address, then
• a stream encryption module, parameterized by an initialization vector, encrypts (110, 140) the instruction stream as it is generated, in the course of this encryption each basic block is encrypted using the specific value of the initialization vector associated with the branch address at which it starts,
- during step c), only the instruction stream thus encrypted is recorded in the main memory,
- during step d), each time an encrypted instruction of the instruction stream is loaded from the main memory for being executed, this instruction is first decrypted (152) by the decryption module, then transferred, without passing through the main memory, to an arithmetic and logic unit of the microprocessor, then executed by this arithmetic and logic unit, in the course of this step d), the added renewal instructions are executed as they are encountered in the instruction stream.

2. Method according to Claim 1, wherein, during step b), it is the execution, by the microprocessor, of a group of instructions of the polymorphic machine code, termed a generator, which generates the instruction stream, the instructions of this generator being recorded (74, 84) in the main memory only in encrypted form so that step b) comprises the loading (86) of an encrypted instruction of the generator from the main memory, then its decryption by the microprocessor, followed by its transfer, without passing through the main memory, to an arithmetic and logic unit of the microprocessor and the execution of this instruction by the arithmetic and logic unit.

3. Method according to any one of the preceding claims, wherein the microprocessor adds (160) the renewal instruction at the start of each basic block so that the execution of this basic block starts with the execution of this renewal instruction.

4. Method according to any one of Claims 1 to 2, wherein:
- the renewal instruction of the value of the initialization vector of the next basic block to be executed is added (108) into the preceding basic block to be executed immediately before this next basic block, and
- during the encryption, the renewal instruction added into the preceding basic block is encrypted (110) by using the same value of the initialization vector as that used for encrypting all the other instructions of the preceding basic block.

5. Method according to any one of the preceding claims, wherein:
- during the encryption (110, 140), the instruction stream is only encrypted by combining it bitwise, using a predetermined function, with a pseudo-random sequence generated by a pseudo-random sequence generator initialized, at the start of each basic block, with the specific value associated with the branch address at which this basic block starts, and
- during the decryption (152), the instruction stream is decrypted by combining it bitwise, using the inverse of said predetermined function, with a pseudo-random sequence generated by an identical pseudo-random sequence generator initialized, at the start of each basic block, with the specific value associated with the branch address at which this basic block starts.

6. Method according to Claim 5, wherein:
- during step b), one of the basic blocks of the generated instruction stream comprises a downstream branch instruction, i.e. a branch instruction to a downstream branch address the numerical value of which is not immediately determinable by the microprocessor since it depends on a number of instructions contained in a future part of the instruction stream that has not yet been generated at this time,
- during the encryption of the instruction stream as it is generated, when this downstream branch instruction is encountered in the basic block in the course of encryption, the microprocessor:
• reserves (122) in the main memory, at the location where the encrypted downstream branch instruction has to be recorded, a space of the same size or larger than the size of the encrypted downstream branch instruction, and
• associates (124) a recall function with a label corresponding to this downstream branch address, this recall function being parameterized by the specific value of the initialization vector associated with the branch address at which this basic block in the course of encryption starts and an order number identifying the position of this downstream branch instruction with respect to the start of the basic block in the course of encryption, then
• the encryption of the instruction stream continues without, at this stage, having encrypted the downstream branch instruction and recorded it in the main memory,
- when said future part of the instruction stream has been generated, the microprocessor executes the recall function associated with the label corresponding to this downstream branch address, the execution of this recall function by the microprocessor causing:
• the replacement (132) of the label with the numerical value of the downstream branch address in the downstream branch instruction,
• the initialization (132) of the encryption module with the value of the initialization vector which parameterizes this recall function,
• the generation (132) by the encryption module thus initialized of a pseudo-random sequence until generating the succession of bits of this pseudo-random sequence corresponding to the order number which parameterizes the recall function, then
• the bitwise combination (132) of this generated succession of bits with the downstream branch instruction in which the label has been replaced by the numerical value of the downstream branch address, then
• the recording (132) of the downstream branch instruction thus encrypted in the space reserved for this purpose in the main memory.

7. Method according to any one of Claims 1 to 5, wherein:
- during step b), one of the basic blocks of the instruction stream comprises a downstream branch instruction, i.e. a branch instruction to a downstream branch address the numerical value of which is not immediately determinable by the microprocessor since it depends on a number of instructions contained in a future part of the instruction stream that has not yet been generated at this time,
- during the encryption of the instruction stream as it is generated, when this downstream branch instruction is encountered in the basic block in the course of encryption, the microprocessor:
• inserts (172), into the instruction stream, a downstream basic block located immediately after the basic block in the course of encryption, the size of this downstream basic block being known and this downstream basic block ending with a copy of the downstream branch instruction,
• replaces (174) the downstream branch instruction in the basic block in the course of encryption, with an unconditional branch instruction to the branch address at which the inserted downstream basic block starts,
• encrypts (176) the unconditional branch instruction then records it in the main memory at the location where the encrypted downstream branch instruction would have had to be recorded,
• reserves (178) in the main memory, at the location where the encrypted downstream basic block has to be recorded, a space at least the same size as this downstream basic block,
• associates (180) a recall function with a label corresponding to the downstream branch address, then
• the encryption of the instruction stream continues without, at this stage, having encrypted the inserted downstream basic block and recorded it in the main memory,
- when said future part of the instruction stream has been generated, the microprocessor executes the recall function associated with the label corresponding to this downstream branch address, the execution of this recall function by the microprocessor causing:
• the replacement (182) of the label with the numerical value of the downstream branch address in the downstream branch instruction of the inserted downstream basic block,
• the encryption (182) by the encryption module of the inserted downstream basic block using for this the specific value of the initialization vector associated with the branch address at which this inserted downstream basic block starts, then
• the recording (182) of the downstream basic block thus encrypted in the space reserved for this purpose in the main memory.

8. Method according to Claim 5, wherein:
- the encryption operation, denoted by Encrypt(m), implemented by the encryption module is homomorphic with respect to an operation O, i.e. Encrypt(m) O Encrypt(r) = Encrypt(m ⊙ r),
- during step b), one of the basic blocks of the generated instruction stream comprises a downstream branch instruction, i.e. a branch instruction to a downstream branch address the numerical value of which is not immediately determinable by the microprocessor since it depends on a number of instructions contained in a future part of the instruction stream that has not yet been generated at this time,
- during the encryption of the instruction stream as it is generated, when this downstream branch instruction is encountered in the basic block in the course of encryption, the microprocessor:
• replaces (200) this downstream branch instruction with a ciphertext R such that R = Encrypt(r), where r is a known word of the same length as the downstream branch instruction,
• records (200) the ciphertext R in the main memory at the location where the encrypted downstream branch instruction has to be recorded,
• associates (201) a recall function with a label corresponding to this downstream branch address, this recall function being parameterized by the specific value of the initialization vector associated with the branch address at which this basic block in the course of encryption starts, with an order number identifying the position of this downstream branch instruction with respect to the start of the basic block in the course of encryption, and with the word r, then
• the encryption of the instruction stream continues without, at this stage, having encrypted the downstream branch instruction and recorded it in the main memory,
- when said future part of the instruction stream has been generated, the microprocessor executes the recall function associated with the label corresponding to this downstream branch address, the execution of this recall function by the microprocessor causing:
• the determination (202) of a word x such that x O r = i, where i is the downstream branch instruction in which the label has been replaced by the numerical value of the downstream branch address and r is the word which parameterizes the recall function,
• the initialization (202) of the encryption module with the value of the initialization vector which parameterizes this recall function,
• the generation (202) by the encryption module thus initialized of a pseudo-random sequence until generating the succession of bits of this pseudo-random sequence corresponding to the order number which parameterizes the recall function, then
• the bitwise combination (202) of this generated succession of bits with the word x determined for obtaining a ciphertext X, then
• the calculation (202) of R O X to obtain a ciphertext of the downstream branch instruction, then
• the recording (202) of the ciphertext of the downstream branch instruction thus obtained in the main memory in place of the word R.

9. Method according to any one of the preceding claims, wherein step a) comprises, at each execution of the polymorphic machine code, the random or pseudo-random drawing (86) of said numerical value.

10. Method according to any one of the preceding claims, wherein during steps b) and d), the encryption module and the decryption module are each parameterized by a secret key so that the encrypted instruction stream also varies according to the value of this secret key, the value of this secret key remaining unchanged throughout the execution of the polymorphic machine code.

11. Method according to any one of the preceding claims, wherein the predetermined function is a primitive ciphertext capable of encrypting or decrypting data.

12. Polymorphic machine code (40) of a predetermined function, this polymorphic machine code comprising instructions executable by a microprocessor (2) which, when executed by this microprocessor, causes:
a) the acquisition of a numerical value capable of varying, from one execution to another of the same polymorphic machine code, then
b) the generation, according to the numerical value acquired, of a first and, alternately, a second instruction stream, these first and second instruction streams each being capable of performing the predetermined function when they are executed by the microprocessor, each of these instruction streams being formed of a succession of basic blocks, each basic block starting at a branch address and ending with a branch instruction to a branch address of another basic block, these first and second instruction streams being distinguished from each other by at least one instruction opcode or a different operand or a different literal value or a different number of instructions,
c) the recording of the generated instruction stream in a main memory, then
d) the execution of the generated instruction stream that has just been recorded, **characterized in that**:
- before step c):
• for each branch address at which a basic block starts, the microprocessor automatically adds into the generated instruction stream a renewal instruction capable, when executed by the microprocessor, of triggering, immediately after the branching to this branch address, the renewal of an initialization vector of a stream decryption module with a specific value associated with this branch address, then
• a stream encryption module, parameterized by an initialization vector, encrypts the instruction stream as it is generated, in the course of this encryption each basic block is encrypted using the specific value of the initialization vector associated with the branch address at which it starts,
- during step c), only the instruction stream thus encrypted is recorded in the main memory,
- during step d), each time an encrypted instruction of the instruction stream is loaded from the main memory for being executed, this instruction is first decrypted by the decryption module, then transferred, without passing through the main memory, to an arithmetic and logic unit of the microprocessor, then executed by this arithmetic and logic unit, in the course of this step d), the added renewal instructions are executed as they are encountered in the instruction stream.

13. Information recording medium (6), **characterized in that** it comprises an executable polymorphic machine code compliant with Claim 12.

14. Electronic apparatus (1) capable of executing a polymorphic machine code of a predetermined function, this apparatus comprising a microprocessor (2) programmed for performing the following steps:
a) the acquisition of a numerical value capable of varying, from one execution to another of the same polymorphic machine code, then
b) the generation, according to the numerical value acquired, of a first and, alternately, a second instruction stream, these first and second instruction streams each being capable of performing the predetermined function when they are executed by the microprocessor, each of these instruction streams being formed of a succession of basic blocks, each basic block starting at a branch address and ending with a branch instruction to a branch address of another basic block, these first and second instruction streams being distinguished from each other by at least one instruction opcode or a different operand or a different literal value or a different number of instructions,
c) the recording of the generated instruction stream in a main memory, then
d) the execution of the generated instruction stream that has just been recorded,
**characterized in that** the microprocessor (2) is also programmed for performing the following steps:
- before step c):
• for each branch address at which a basic block starts, the microprocessor automatically adds into the generated instruction stream a renewal instruction capable, when executed by the microprocessor, of triggering, immediately after the branching to this branch address, the renewal of an initialization vector of a stream decryption module (20) with a specific value associated with this branch address, then
• a stream encryption module (18), parameterized by an initialization vector, encrypts the instruction stream as it is generated, in the course of this encryption each basic block is encrypted using the specific value of the initialization vector associated with the branch address at which it starts,
- during step c), only the instruction stream thus encrypted is recorded in the main memory,
- during step d), each time an encrypted instruction of the instruction stream is loaded from the main memory for being executed, this instruction is first decrypted by the decryption module (20), then transferred, without passing through the main memory, to an arithmetic and logic unit (10) of the microprocessor (2), then executed by this arithmetic and logic unit, in the course of this step d), the added renewal instructions are executed as they are encountered in the instruction stream.

15. Apparatus according to Claim 14, wherein the encryption and decryption modules (18, 20) are only implemented in physical circuits formed on the same substrate as that on which the physical circuits of the arithmetic and logic unit (10) of the microprocessor (2) are formed.
